# EUROPEAN PATENT SPECIFICATION

(11) **EP 4 280 020 B1**
(45) Date of publication and mention of the grant of the patent: **05.08.2026**
(21) Application number: 22756430.9
(22) Date of filing: 10.02.2022
(51) Int. Cl.: G06F 1/16, G06F 3/0354

(54) **ELECTRONIC DEVICE COMPRISING PEN INPUT DEVICE**
ELEKTRONISCHE VORRICHTUNG MIT STIFTEINGABEVORRICHTUNG
DISPOSITIF ÉLECTRONIQUE COMPORTANT UN DISPOSITIF D'ENTRÉE AU STYLET

(30) Priority: 17.02.2021 KR 20210020880
(43) Date of publication of application: 22.11.2023
(73) Proprietor: Samsung Electronics Co., Ltd., Suwon-si, Gyeonggi-do 16677 (KR)
(72) Inventor: KANG, Hyosung, Suwon-si, Gyeonggi-do 16677 (KR); SUNG, Haewon, Suwon-si, Gyeonggi-do 16677 (KR); PARK, Jungbae, Suwon-si, Gyeonggi-do 16677 (KR)
(74) Representative: Gulde & Partner
(86) International application number: PCT/KR2022/002037
(87) International publication number: WO 2022/177231

(56) References cited:
- WO-A1-2021/025494
- WO-A1-2021/025494
- CN-A- 108 363 458
- JP-A- 2019 500 663
- JP-B1- 6 793 234
- KR-A- 20200 124 142
- US-A1- 2020 174 529
- US-A1- 2023 095 925

## Description

### [Technical Field]

The present disclosure relates to an electronic device including a pen input device.

### [Background Art]

As a "paperless" environment, which thinks about the environment and can change a way of working more efficiently, is established, the use of a smart device has been further increased, and with the rapid change to the mobile age, an electronic device may include a pen input device (e.g., stylus pen). As a pen input device, which was previously needed only for the specific purpose, becomes increasingly sophisticated and has many functions, the role of the pen input device has been expanded as a new tool.

US 2020/0174529 A1 discloses a mono barrel hinge. WO 2021025494 A1 discloses a flexible display assembly. KR 20200124142 A discloses a hinge structure for a foldable device.

### [Disclosure of Invention]

### [Technical Problem]

Due to slimming or structural features of an electronic device, it may be difficult to secure a space for detachably installing a pen input device in the electronic device.

Various embodiments of the disclosure may provide an electronic device including a detachable pen input device.

Technical problems to be solved in the disclosure are not limited to the above-mentioned technical problems, and other unmentioned technical problems will be able to be understood by those of ordinary skill in the art to which the disclosure pertains from the following description.

### [Solution to Problem]

The present invention is defined by the appended claims. According to an embodiment of the disclosure, an electronic device may include: a foldable housing including a first housing, a second housing, and a folding part between the first housing and the second housing; and a pen input device detachably attached to the folding part, wherein the folding part includes a first hinge and a second hinge configured to connect the first housing and the second housing with each other, and a hinge housing configured to cover the first hinge and the second hinge and to form a part of an outer surface of the electronic device, and wherein the hinge housing includes a first recess located between the first hinge and the second hinge and configured to dispose the pen input device therein.

### [Advantageous Effects of Invention]

The electronic device including the pen input device according to various embodiments of the disclosure is implemented to insert the pen input device in the hinge housing included in the folding part of the electronic device, and thus can improve space efficiency or space utilization.

In addition, effects that can be obtained or expected through various embodiments of the disclosure are disclosed directly or implicitly in the detailed description of the embodiments of the disclosure. For example, various effects that are expected according to various embodiments of the disclosure will be disclosed in the detailed description to be described later.

### [Brief Description of Drawings]

FIG. 1 is a block diagram of an electronic device in a network environment in an embodiment.
FIG. 2 shows views of an electronic device in an unfolded state when viewed in various directions.
FIG. 3 shows views of an electronic device in a folded state when viewed in various directions.
FIG. 4 is a perspective view illustrating an electronic device in an intermediate state in an embodiment.
FIG. 5 is an exploded perspective view illustrating a part of an electronic device in an embodiment.
FIG. 6 is an x-y plane view illustrating a part of an electronic device in relation to FIG. 5 in an embodiment.
FIG. 7 illustrates a cross-sectional structure taken along line A-A' of FIG. 2 in an embodiment.
FIG. 8 is a partial cross-sectional perspective view illustrating a part of an electronic device in relation to FIG. 7 in an embodiment.
FIG. 9 illustrates a cross-sectional structure of an electronic device in a folded state in relation to FIG. 7 in an embodiment.
FIG. 10 illustrates a state in which a pen input device is disposed in an electronic device and a cross-sectional structure thereof in an embodiment.
FIG. 11 illustrates a pen input device according to another embodiment.
FIG. 12 illustrates a state in which the pen input device of FIG. 11 is disposed in an electronic device and a cross-sectional structure thereof in an embodiment.
FIG. 13 illustrates a state in which the pen input device of FIG. 11 is disposed in an electronic device and a cross-sectional structure thereof in another embodiment.
FIG. 14 illustrates a cross-sectional structure illustrating a part indicated by a drawing reference symbol "D" in another embodiment in which an example of FIG. 13 is changed or modified.
FIGS. 15 and 16 illustrate cross-sectional structures in another embodiment in which an example of FIG. 13 is changed or modified.

### [Mode for the Invention]

Hereinafter, various embodiments of the disclosure disclosed herein will be described with reference to the accompanying drawings.

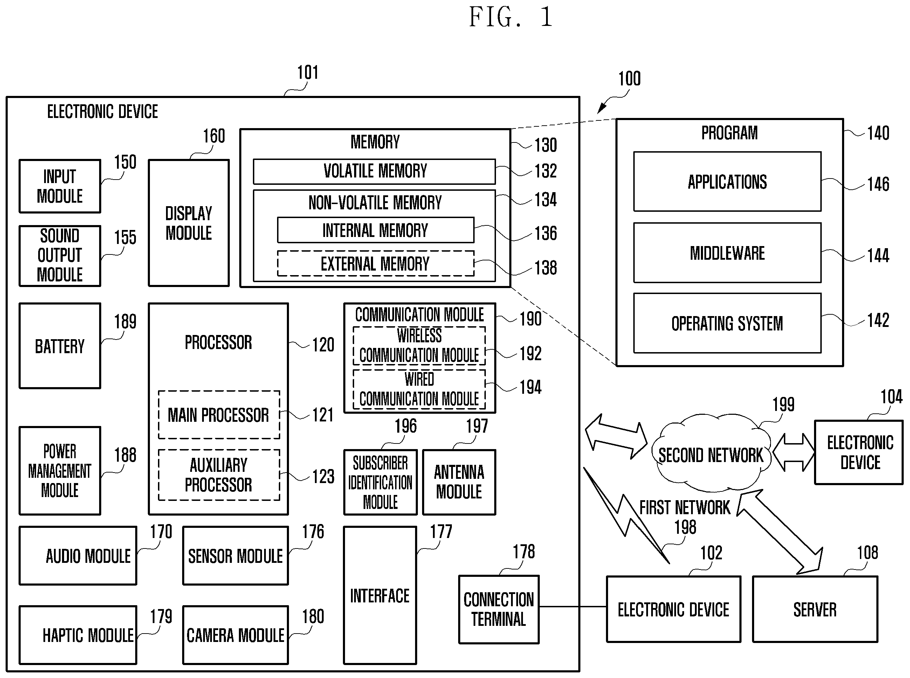

FIG. 1 is a block diagram of an electronic device 101 in a network environment 100 according to an embodiment.

Referring to FIG. 1, the electronic device 101 in the network environment 100 may communicate with an external electronic device 102 via a first network 198 (e.g., a short-range wireless communication network), or at least one of an external electronic device 104 or a server 108 via a second network 199 (e.g., a long-range wireless communication network). The electronic device 101 may communicate with the external electronic device 104 via the server 108. The electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, and/or an antenna module 197. In some embodiments of the disclosure, at least one (e.g., the connection terminal 178) of the components may be omitted from the electronic device 101, or one or more other components may be added in the electronic device 101. In some embodiments of the disclosure, some of the components may be implemented as single integrated circuitry. For example, the sensor module 176, the camera module 180, or the antenna module 197 may be implemented as embedded in single component (e.g., the display module 160).

The processor 120 may execute, for example, software (e.g., a program 140) to control at least one other component (e.g., a hardware or software component) of the electronic device 101 coupled with the processor 120, and may perform various data processing or computation. As at least part of the data processing or computation, the processor 120 may load a command or data received from another component (e.g., the sensor module 176 or the communication module 190) in a volatile memory 132, process the command or the data stored in the volatile memory 132, and store resulting data in a non-volatile memory 134. The processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., a sleep) state, or together with the main processor 121 while the main processor 121 is in an active state (e.g., executing an application). The auxiliary processor 123 (e.g., an ISP or a CP) may be implemented as part of another component (e.g., the camera module 180 or the communication module 190) functionally related to the auxiliary processor 123. According to an embodiment of the disclosure, the auxiliary processor 123 (e.g., a neural network processing device) may include a hardware structure specified for processing an artificial intelligence model. The artificial intelligence model may be created through machine learning. Such learning may be performed, for example, in the electronic device 101 itself on which the artificial intelligence model is performed, or may be performed through a separate server (e.g., the server 108). The learning algorithms may include, for example, supervised learning, unsupervised learning, semi-supervised learning, or reinforcement learning, but is not limited thereto. The artificial intelligence model may include a plurality of artificial neural network layers. The artificial neural network may be any of a deep neural network (DNN), a convolutional neural network (CNN), a recurrent neural network (RNN), a restricted Boltzmann machine (RBM), a deep belief network (DBN), a bidirectional recurrent DNN (BRDNN), a deep Q-network, or a combination of two or more of the above-mentioned networks, but is not limited the above-mentioned examples. In addition to the hardware structure, the artificial intelligence model may additionally or alternatively include a software structure.

The memory 130 may store various data used by at least one component (e.g., the processor 120 or the sensor module 176) of the electronic device 101. The data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, and/or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record, and the receiver may be used for incoming calls. The receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. The display module 160 may include touch circuitry (e.g., a touch sensor) adapted to detect a touch, or sensor circuitry (e.g., a pressure sensor) adapted to measure the intensity of force incurred by the touch.

The audio module 170 may convert a sound into an electrical signal and vice versa. The audio module 170 may obtain the sound via the input module 150, or output the sound via the sound output module 155 or a headphone of an external electronic device (e.g., the external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. The sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. The interface 177 may include, for example, a high-definition multimedia interface (HDMI), a universal serial bus (USB) interface, a secure digital (SD) card interface, and/or an audio interface.

The connecting terminal 178 may include a connector via which the electronic device 101 may be physically connected with the external electronic device (e.g., the external electronic device 102). The connecting terminal 178 may include, for example, an HDMI connector, a USB connector, an SD card connector, and/or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. The haptic module 179 may include, for example, a motor, a piezoelectric element, or an electric stimulator.

The camera module 180 may capture a still image or moving images. The camera module 180 may include one or more lenses, image sensors, ISPs, or flashes.

The power management module 188 may manage power supplied to or consumed by the electronic device 101. The power management module 188 may be implemented as at least part of, for example, a power management integrated circuit (PMIC).

The battery 189 may supply power to at least one component of the electronic device 101. The battery 189 may include, for example, a primary cell which is not rechargeable, a secondary cell which is rechargeable, and/or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more CPs that are operable independently from the processor 120 (e.g., the AP) and supports a direct (e.g., wired) communication or a wireless communication. The communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BLUETOOTH, wireless-fidelity (Wi-Fi) direct, or IR data association (IrDA)) or the second network 199 (e.g., a long-range communication network, such as a legacy cellular network, a 5^{th} generation (5G) network, a next generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4^{th} generation (4G) network, and next-generation communication technology, e.g., new radio (NR) access technology. The NR access technology may support high-speed transmission of high-capacity data (i.e., enhanced mobile broadband (eMBB)), minimization of terminal power and connection of multiple terminals (massive machine type communications (mMTC)), or high reliability and low latency (ultra-reliable and low-latency communications (URLLC)). The wireless communication module 192 may support a high-frequency band (e.g., a mmWave band) to achieve, for example, a high data transmission rate. The wireless communication module 192 may support various technologies for securing performance in a high-frequency band, such as beamforming, massive multiple-input and multiple-output (MIMO), full-dimensional MIMO (FD-MIMO), array antenna, analog beam-forming, or large-scale antenna. The wireless communication module 192 may support various requirements specified in the electronic device 101, an external electronic device (e.g., external the electronic device 104), or a network system (e.g., the second network 199). According to an embodiment of the disclosure, the wireless communication module 192 may support a peak data rate for implementing eMBB (e.g., 20Gbps or more), loss coverage for implementing mMTC (e.g., 164dB or less), or U-plane latency for realizing URLLC (e.g., 0.5ms or less for each of downlink (DL) and uplink (UL) or 1ms or less for round trip).

The antenna module 197 may transmit or receive a signal or power to or from the outside (e.g., the external electronic device) of the electronic device 101. The antenna module 197 may include an antenna including a radiating element including a conductive material or a conductive pattern formed in or on a substrate (e.g., a printed circuit board (PCB)). The antenna module 197 may include a plurality of antennas (e.g., an antenna array). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. Another component (e.g., a radio frequency integrated circuit (RFIC)) other than the radiating element may be additionally formed as part of the antenna module 197.

According to various embodiments of the disclosure, the antenna module 197 may form a mmWave antenna module. According to an embodiment of the disclosure, the mmWave antenna module may include a PCB, an RFIC that is disposed on or adjacent to a first surface (e.g., the bottom surface) of the PCB and is capable of supporting a predetermined high-frequency band (e.g., a mmWave band), and a plurality of antennas (e.g., array antennas) that is disposed on or adjacent to a second surface (e.g., the top surface or the side surface) of the PCB and is capable of transmitting or receiving a signal of the predetermined high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

Commands or data may be transmitted or received between the electronic device 101 and the external electronic device 104 via the server 108 coupled with the second network 199. Each of the external electronic devices 102 or 104 may be a device of a same type as, or a different type, from the electronic device 101. All or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide an ultra-low delay service using, for example, distributed computing or MEC. In another embodiment of the disclosure, the external electronic device 104 may include an internet of things (IoT) device. The server 108 may be an intelligent server using machine learning and/or neural networks. According to an embodiment of the disclosure, the external electronic device 104 or the server 108 may be included in the second network 199. The electronic device 101 may be applied to an intelligent service (e.g., smart home, smart city, smart car, or healthcare) based on 5G communication technology or IoT-related technology.

An electronic device according to an embodiment of the disclosure may be one of various types of electronic devices. The electronic devices may include a portable communication device (e.g., a smartphone), a computer device, a portable multimedia device, a portable medical device, a camera, a wearable device, or a home appliance. However, the electronic device is not limited to any of those described above.

Various embodiments of the disclosure and the terms used herein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., wiredly), wirelessly, or via a third element.

The term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment of the disclosure, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

A method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PLAYSTORE^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

Each component (e.g., a module or a program) of the above-described components may include a single entity or multiple entities. One or more of the above-described components may be omitted, or one or more other components may be added. Alternatively or additionally, a plurality of components (e.g., modules or programs) may be integrated into a single component. In such a case, the integrated component may perform one or more functions of each of the plurality of components in the same or similar manner as they are performed by a corresponding one of the plurality of components before the integration. Operations performed by the module, the program, or another component may be carried out sequentially, in parallel, repeatedly, or heuristically, or one or more of the operations may be executed in a different order or omitted, or one or more other operations may be added.

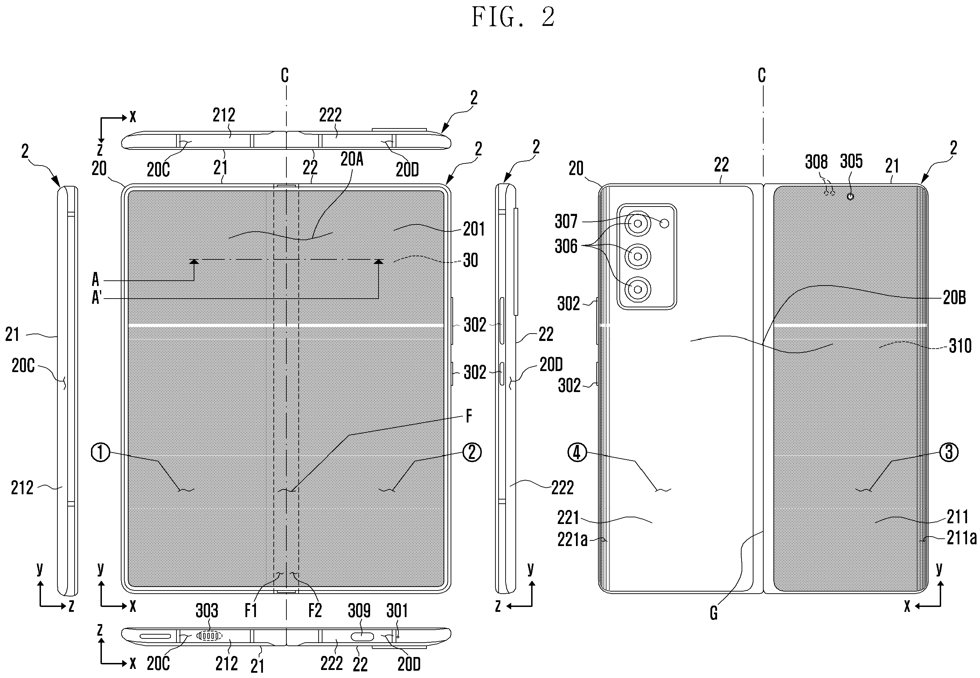

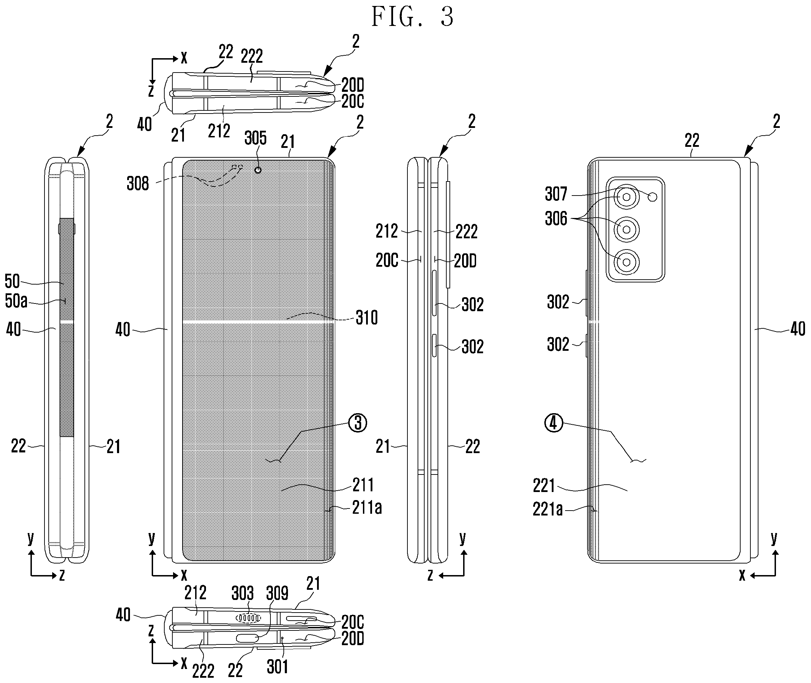

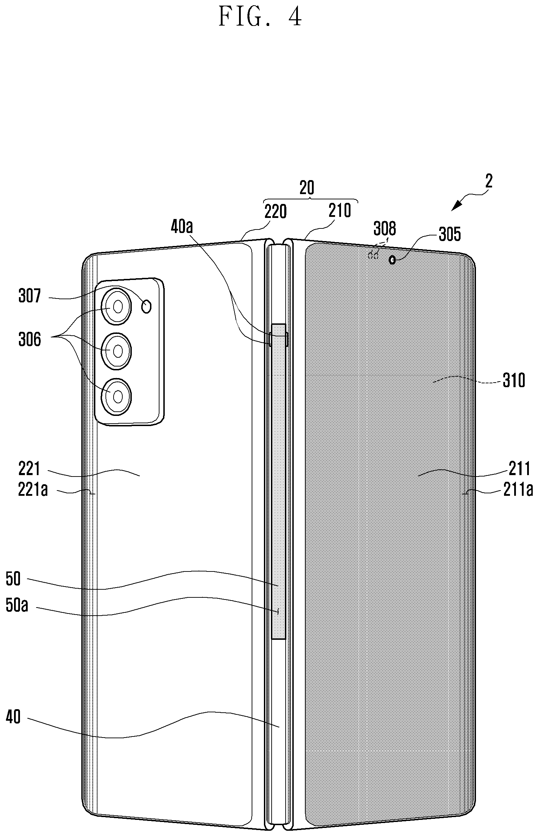

FIG. 2 shows views of an electronic device in a flat or unfolded state when viewed in various directions in an embodiment. FIG. 3 shows views of an electronic device 2 in a folded state when viewed in various directions in an embodiment. FIG. 4 is a perspective view illustrating an electronic device 2 in an intermediate state in an embodiment.

With reference to FIGS. 2 and 3, in an embodiment, an electronic device 2 includes a foldable housing 20. The foldable housing 20 may include a first surface 20A of the electronic device 2 and a second surface 20B of the electronic device 2 located on an opposite side of the first surface 20A. It may be interpreted that the first surface 20A is a front surface disposed in a direction (e.g., +z-axis direction) in which the flexible display 30 included in the electronic device 2 is visually exposed, and the second surface 20B is a rear surface disposed in an opposite direction (e.g., -z-axis direction) thereof. The foldable housing 20 may include a first side surface 20C and a second side surface 20D of the electronic device 2, which surround at least a part of a space between the first surface 20A and the second surface 20B. The first surface 20A may include a first cover area ①, a second cover area ②, and a folding cover area F between the first cover area ① and the second cover area ②. In the unfolded state of the foldable housing 20, the first surface 20A may be substantially a plane, and the first cover area ①, the second cover area ②, and the folding cover area F may be directed substantially in the same direction. The second surface 20B may include a third cover area ③ and a fourth cover area ④. The third cover area ③ may be located on an opposite side to the first cover area ① of the first cover 20A, and may be directed in an opposite direction to the first cover area ①. The fourth cover area ④ may be located on an opposite side to the second cover area ② of the first surface 20A, and may be directed in an opposite direction to the second cover area ②. In an embodiment, the foldable housing 20 may be implemented in an in-folding structure in which the first surface 20A is folded inwardly. For example, in a folded state (refer to FIG. 2) of the foldable housing 20, the folding cover area F may be disposed in the form of a plane, and the first cover area ① and the second cover area ② may form an angle of about 180 degrees. In the folded state (refer to FIG. 3) of the foldable housing 20, the folding cover area F may be disposed in the form of a curved surface, and the first cover area ① and the second cover area ② may form an angle that is different from the angle of about 180 degrees. The folded state may include a fully folded state or an intermediate state. The fully folded state (refer to FIG. 3) may be a maximally folded state where the first cover area ① and the second cover area ② of the first surface 20A are no longer getting closer to each other, and for example, the first cover area ① and the second cover area ② may form an angle of about 0 degree to about 10 degrees. In the fully folded state, the first surface 20A may not be exposed substantially to the outside. The intermediate state (refer to FIG. 4) may indicate a state between the unfolded state and the fully folded state. The folding cover area F of the first surface 20A may be further bent in the fully folded state rather than the intermediate state. In a certain embodiment, the electronic device 2 may be implemented in an out-folding structure in which the first surface 20A (or screen) is folded outwardly.

According to an embodiment, the foldable housing 20 may include a front cover (e.g., window) 201 that forms at least a part of the first surface 20A. The flexible display 30 may overlap the front cover 101 at least partly, and may be located in an inner space of the electronic device 2. The front cover 201 may protect the flexible display 30 from outside, and may be substantially transparent. Light output from the flexible display 30 may propagate to the outside after passing through the front cover 201. For example, the flexible display 30 may include a first display area (or active area) that overlaps the first cover area ①, a second display area that overlaps the second cover area ② of the first surface 20A, and a third display area (or third active area) that overlaps the folding cover area F. A screen may indicate an area on which an image can be expressed in a device composed of the flexible display 30 and the front cover 201, and for example, may include the display area of the flexible display 30 and an area of the front cover 201 that overlaps the display area. In a certain embodiment, the front cover 201 is a constituent element included in the flexible display 30, and may be integrally formed with the flexible display 30. The front cover 201 may be implemented in the form of a thin film, such as a film, having flexibility. For example, the front cover 201 may include a plastic film (e.g., polyimide film) or a thin film glass (e.g., ultra-thin glass (UTG)). In a certain embodiment, the front cover 201 may include a plurality of layers. For example, the front cover 201 may be in the form in which a coated layer or a protection layer of various polymer materials (e.g., polyester (PET), polyimide (PI), or thermoplastic polyurethane (TPU)) is disposed on the plastic film or the thin film glass.

According to an embodiment, the foldable housing 20 includes a first housing (or a first housing part or a first housing structure) 21, a second housing (or a second housing part or a second housing structure) 22, and/or a hinge assembly. The first housing 21 and the second housing 22 are connected with each other through the hinge assembly, and are mutually rotatable based on a folding axis C (e.g., a rotation axis of the hinge assembly) of the foldable housing 20. The first housing 21 may include a first cover part of the front cover 201 located on one side based on the folding axis C, a first rear cover 211 forming at least a part of a third cover area ③ of the second surface 20B, and a first lateral bezel structure (or first lateral member) 212 surrounding at least a part of a space between the first cover part and the first rear cover 211 and forming the first side surface 20C. For example, the first cover part of the front cover 201 may form a first cover area ① and a first folding cover area F1 located on one side based on the folding axis C of the folding cover area F. The second housing 22 may include a second cover part of the front cover 201 located on one side based on the folding axis C, a second rear cover 221 forming at least a part of a fourth cover area ④ of the second surface 20B, and a second lateral bezel structure (or second lateral member) 222 surrounding at least a part of a space between the second cover part and the second rear cover 221 and forming the second side surface 20D. For example, the second cover part of the front cover 201 may form a second folding cover area F2 located on the other side based on the folding axis C of the folding cover area F. In the fully folded state of the foldable housing 20, the first lateral bezel structure 212 and the second lateral bezel structure 222 may be aligned to at least partly overlap each other. For example, the first lateral bezel structure 212 and/or the second lateral bezel structure 222 may be formed of ceramic, polymer, metal (e.g., aluminum, stainless steel, or magnesium) or a combination of at least two of the above materials. The first lateral bezel structure 212 and/or the second lateral bezel structure 222 may include various metal materials, for example, such as titanium, an amorphous alloy, a metal-ceramic composite material (e.g., cermet), stainless steel, magnesium, a magnesium alloy, aluminum, an aluminum alloy, a zinc alloy, or a copper alloy. The first rear cover 211 and/or the second rear cover 221 may be substantially opaque. For example, the first rear cover 211 and/or the second rear cover 221 may be formed of coated or colored glass, ceramic, polymer, metal (e.g., aluminum, stainless steel, or magnesium), or a combination of at least two of the above materials. For example, the first rear cover 211 or the second rear cover 221 may include at least one coated layer disposed on the plate by using the plate and coatings of various materials, such as transparent glass, ceramic, or polymer. As another example, the first rear cover 211 or the second rear cover 221 may include the plate of various materials, such as transparent glass, ceramic, or polymer, and a film (e.g., decoration film) attached to the plate and having various visual effects. In a certain embodiment, the first rear cover 211 and the first lateral bezel structure 212 may be integrally formed, and may include the same material. In a certain embodiment, the second rear cover 221 and the second lateral bezel structure 222 may be integrally formed, and may include the same material.

According to an embodiment, the hinge assembly may include a hinge housing 40. The hinge housing 40 is an element that covers at least one hinge connecting the first housing 21 and the second housing 22 with each other, and in a certain embodiment, the hinge housing 40 may be referred to as a "hinge cover". In case that the electronic device 2 is switched from a folded state of FIG. 3 to an unfolded state of FIG. 2, the hinge housing 40 can cover the exposure of an inside of the electronic device 2 on the side of the folding axis C as a gap G between the first housing 21 and the second housing 22 is opened. As illustrated in FIG. 2, in the fully unfolded state of the electronic device 2, the gap G may not substantially exist, and the hinge housing 40 may not be exposed to the outside through being hidden by the first housing 21 and the second housing 22. Although not illustrated, in the intermediate state, the hinge housing 40 may be partly exposed between the first housing 21 and the second housing 22. The hinge housing 40 may be more exposed in the folded state of FIG. 3 rather than in the intermediate state.

According to a certain embodiment, the foldable housing 20 may be referred to as a structure (e.g., foldable housing structure or foldable housing assembly) that forms at least a part of the first surface 20A, the second surface 20B, the first side surface 20C, and the second side surface 20D. For example, the foldable housing 20 may include a first housing part, a second housing part, and a folding part connected to the first housing part and the second housing part. The folding part may indicate a more flexible part than the first housing part and the second housing part, and may be bent in the folded state of the electronic device 2. The folding part may include, for example, a hinge assembly. As another example, the folding part may include a structure in which a plurality of bars are arranged (e.g., multi-bar structure). However, the structure of the folding part is not limited thereto, but may be implemented as other various structures having bending characteristics while connecting the first housing and the second housing with each other.

According to a certain embodiment, the electronic device 2 may further include a cover member (not illustrated) disposed on the front cover 201. For example, the cover member may be located in a screen surrounding area of the front cover 201 along an edge of the front cover 201. When the electronic device 2 is switched from the unfolded state of FIG. 2 to the folded state of FIG. 3, the cover member may reduce damage of the front cover 201 by cushioning the impact between the first housing 21 and the second housing 22. For example, when the electronic device 2 is switched from the unfolded state of FIG. 2 to the folded state of FIG. 3, a part of the cover member located on the first housing and the other part of the cover member located on the second housing come in contact with each other, and the first cover area ① and the second cover area ② of the front cover 201 may be located to be close to each other without contact. The cover member is a bezel surrounding a screen, and may contribute to aesthetics. In a certain embodiment, the cover member may be omitted due to screen extension, or may be formed as various forms of buffering members.

According to an embodiment, the electronic device 2 may include a display (hereinafter, sub-display) 310 located inside the first housing 21 to be adjacent to the first rear cover 211. A partial area of the first rear cover 211 may overlap the sub-display 310, and may be substantially transparent. In the folded state of FIG. 3, the electronic device 2 may output an image by using the sub-display 310 instead of the flexible display 30.

According to an embodiment, the first rear cover 211 may include a first curved surface area 211a being bent from the third cover area ③ to the first cover area ① and extending seamlessly. The first curved surface area 211a may be formed adjacent to a long edge of the first rear cover 211 that is substantially parallel to the folding axis C. The sub-display 310 may include a flexible display that may be disposed in the corresponding form.

According to an embodiment, the second rear cover 221 may include a second curved surface area 221a being bent from the fourth cover area ④ to the second cover area ② and extending seamlessly. The second curved surface area 221a may be formed adjacent to a long edge of the second rear cover 221 that is substantially parallel to the folding axis C. For example, in the unfolded state (refer to FIG. 2) or the folded state (refer to FIG. 3) of the electronic device 2, the first curved surface area 211a and the second curved surface area 221a may be located substantially symmetrically on opposite sides to each other for aesthetics. In a certain embodiment, the first curved surface area 211a or the second curved surface area 221a may be omitted.

For example, the electronic device 2 may be the electronic device 101 of FIG. 1, or may include at least one of constituent elements included in the electronic device 101 of FIG. 1. In an embodiment, the electronic device 2 may include an input module (e.g., input module 150 of FIG. 1), a sound output module (e.g., sound output module 155 of FIG. 1), a camera module (e.g., camera module 180 of FIG. 1), a sensor module (e.g., sensor module 176 of FIG. 1), or a connection terminal (e.g., connection terminal 178 of FIG. 1). In a certain embodiment, the electronic device 2 may omit at least one of the constituent elements, or may additionally include other constituent elements. The location or the number of constituent elements included in the electronic device 2 is not limited to the illustrated example, but may vary.

The input module may include, for example, a microphone located inside the electronic device 2 and a microphone hole 301 formed on the second side surface 20D to correspond to the microphone. The location or the number of input modules including the microphone and the corresponding microphone hole 301 is not limited to the illustrated example, but may vary. In a certain embodiment, the electronic device 2 may include a plurality of microphones that can detect the direction of sound.

The input module may include, for example, key input devices 302. The key input devices 302 may be located, for example, in an opening (not illustrated) formed on the first side surface 20C. In a certain embodiment, the electronic device 2 may not include some or all of the key input devices 302, and may be implemented as soft keys using the flexible display 30. In a certain embodiment, the input module may include at least one sensor module.

The sound output module may include, for example, a speaker located inside the electronic device 2 and a speaker hole 303 formed on the first side surface 20C to correspond to the speaker. The location or the number of sound output modules including speakers and corresponding speaker holes 303 is not limited to the illustrated example, but may vary. In a certain embodiment, the microphone hole 301 and the speaker hole 303 may be implemented as one hole. In a certain embodiment, a piezo-electric speaker of which the speaker hole 303 is omitted may be implemented. The sound output module may include, for example, a call receiver located inside the electronic device 2 and a receiver hole (not illustrated) formed on the third cover area ③ to correspond to the call receiver.

The camera module may include, for example, a first camera module (or front camera module) 305 located to correspond to the third cover area ③, or a plurality of second camera modules (or rear camera modules) 306 located to correspond to the fourth cover area ④. The first camera module 305 and/or the plurality of second camera modules 306 may include one or a plurality of lenses, an image sensor, and/or an image signal processor. The location or the number of the first camera modules 305 or the plurality of second camera modules 306 is not limited to the illustrated example, but may vary.

According to an embodiment, the sub-display 310 may include an opening aligned with the first camera module 305. External light may reach the first camera module 305 through the first rear cover 211 and the opening of the sub-display 310. In a certain embodiment, the opening of the sub-display 310 may be formed in the form of a notch in accordance with the location of the first camera module 305. In a certain embodiment, the first camera module 305 may be located at a lower end of the sub-display 310, and a related function (e.g., image capturing) may be performed without visually distinguishing (or exposing) the location of the first camera module 305. For example, the first camera module 305 may be located on the rear surface of the sub-display 310 or below or beneath the sub-display 310, and may include a hidden under display camera (UDC). In a certain embodiment, the first camera module 305 may be located to be aligned with a recess formed on the rear surface of the sub-display 310. The first camera module 305 may obtain an image of an external subject in a state where it is disposed to overlap at least a part of the screen without being visually exposed to the outside. In this case, a partial area of the sub-display 310 that is at least partly overlap the first camera module 305 may include other pixel structure and/or wiring structure in contrast to other areas. For example, the partial area of the sub-display 310 that is at least partly overlap the first camera module 305 may have a different pixel density in contrast to other areas. The pixel structure and/or the wiring structure formed on the partial area of the sub-display 310 that is at least partly overlap the first camera module 305 may reduce a loss of light between the outside and the first camera module 305. In a certain embodiment, pixels may not be disposed on the partial area of the sub-display 310 that is at least partly overlap the first camera module 305.

According to an embodiment, the plurality of second camera modules 306 may have different attributes (e.g., viewing angles) or functions, and for example, may include a dual camera or a triple camera. The plurality of second camera modules 306 may include a plurality of camera modules including lenses having different viewing angles, and based on a user's selection, the electronic device 2 may control to change the viewing angle of the camera module being performed in the electronic device 2. The plurality of second camera modules 306 may include at least one of a wide-angle camera, a telephoto camera, a color camera, a monochrome camera, or an infrared (IR) camera (e.g., time of flight (TOF) camera or structured light camera). In a certain embodiment, the IR camera may operate as at least a part of the sensor module. The electronic device 2 may include a flash 307 as a light source for the plurality of second camera modules 306. The flash 307 may include, for example, a light-emitting diode or a xenon lamp.

The sensor module may generate an electrical signal or a data value corresponding to an operation state inside the electronic device 2 or an external environment state. The sensor module may include, for example, at least one of a proximity sensor, a gesture sensor, a gyro sensor, a barometric pressure sensor, a magnetic sensor, an acceleration sensor, a grip sensor, a color sensor, an infrared (IR) sensor, a biosensor (e.g., fingerprint sensor or an HRM sensor), a temperature sensor, a humidity sensor, or an illumination sensor.

According to an embodiment, the sensor module may include an optical sensor 308 located inside the electronic device 2 to correspond to the third cover area ③. The optical sensor 308 may include, for example, the proximity sensor or the illumination sensor. The optical sensor 308 may be aligned with the opening formed on the sub-display 310. The external light may enter the optical sensor 308 through the first rear cover 211 and the opening of the sub-display 310. In a certain embodiment, the optical sensor 308 may be located at the lower end of the sub-display 310, and may perform a related function without visually distinguishing (or exposing) the location of the optical sensor 308. For example, the optical sensor 308 may be located on the rear surface of the sub-display 310 or below or beneath the sub-display 310. In a certain embodiment, the optical sensor 308 may be located to be aligned with the recess formed on the rear surface of the sub-display 310. The optical sensor 308 may be disposed to overlap at least a part of the screen, and may perform a sensing function without being exposed to the outside. In this case, a partial area of the sub-display 310 that at least partly overlaps the optical sensor 308 may include a different pixel structure and/or wiring structure in contrast to other areas. For example, the partial area of the sub-display 310 that at least partly overlaps the optical sensor 308 may have a different pixel density in contrast to other areas. In a certain embodiment, the sensor module may include a fingerprint sensor (not illustrated) located under the sub-display 310. The fingerprint sensor may be implemented by a capacitive method, an optical method, or an ultrasonic method. The pixel structure and/or the wiring structure formed on the partial area of the sub-display 310 that at least partly overlaps the sensor module may reduce a loss of light when various types of signals (e.g., light or ultrasonic waves) related to the sensor module pass between the outside and the sensor module. In a certain embodiment, a plurality of pixels may not be disposed on the partial area of the sub-display 310 that at least partly overlaps the sensor module.

The connection terminal may include, for example, a connector (e.g., USB connector) located inside the electronic device 2. The electronic device 2 may include a connector hole 309 formed on the second side surface 20D to correspond to the connector. The electronic device 2 may transmit and/or receive a power and/or data to and/or from an external electronic device electrically connected to the connector through the connector hole 309. The location or the number of connectors and corresponding connector holes 309 may not be limited to the illustrated example, but may vary.

According to an embodiment, the electronic device 2 includes a detachable pen input device 50 (e.g., an electronic pen, a digital pen, or a stylus pen). The pen input device 50 may be detachably attached to the hinge housing 40. The hinge housing 40 may include a recess, and the pen input device 50 may be inserted into the recess. The pen input device 50 may be detachably attached to the recess of the hinge housing 40 exposed to the outside in the folded state (refer to FIG. 3) or the intermediate state (refer to FIG. 4) of the electronic device 2. There may be a gap 40a that is used for a user to separate the pen input device 50 from the hinge housing 40. In case that the pen input device 50 is disposed in the recess of the hinge housing 40, in the folded state (refer to FIG. 3) or the intermediate state (refer to FIG. 4) of the electronic device 2, a part 50a of the surface of the pen input device 50 may form a part of an outer surface of the electronic device 2 together with the hinge housing 40. In case that the pen input device 50 is disposed in the recess of the hinge housing 40, the part 50a of the surface of the pen input device 50 may be smoothly connected with the surface of the hinge housing 40 to contribute to the aesthetics.

According to an embodiment, a housing (hereinafter, pen housing) that forms an external appearance of the pen input device 50 may include the same material as the material of the hinge housing 40. When the pen input device 50 is disposed in the recess of the hinge housing 40, the pen housing may form the part 50a of the outer surface of the electronic device 2. In a certain embodiment, the pen housing may include a different material from the material of the hinge housing 40. The pen housing or the hinge housing may be formed of ceramic, polymer, metal (e.g., aluminum, stainless steel, or magnesium) or a combination of at least two of the above materials. In a certain embodiment, the pen housing or the hinge housing 40 may include at least one coating layer (or film layer), and the coating layer may include, for example, various layers, such as a layer for protection from the outside or a layer for visual effects.

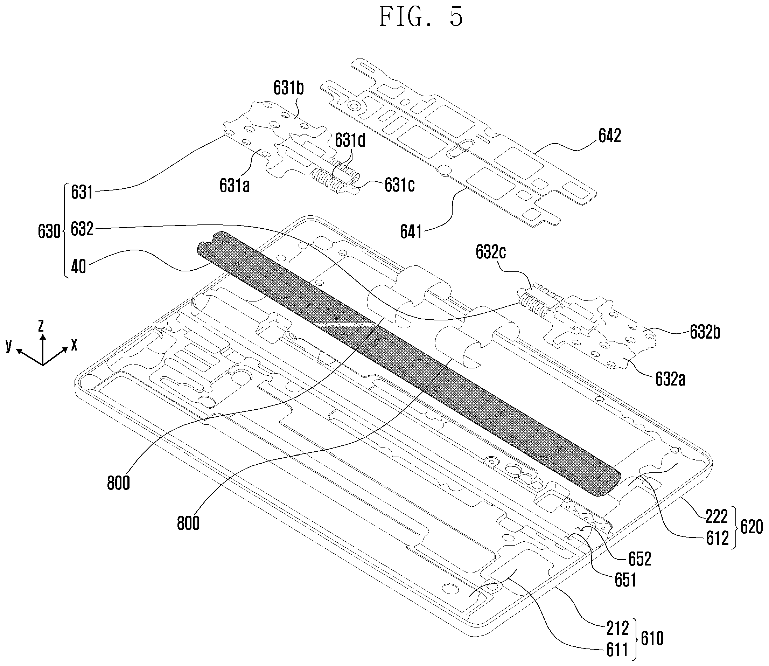

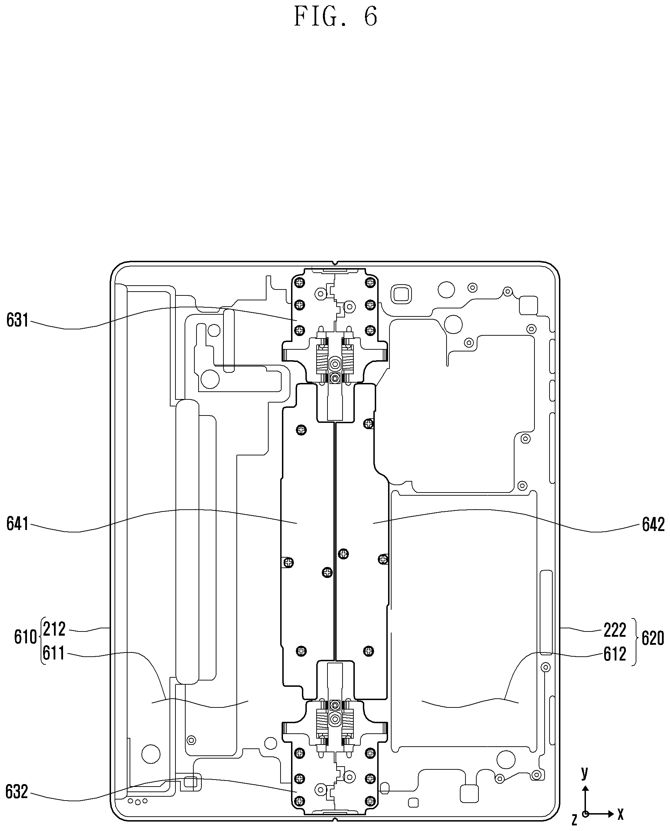

FIG. 5 is an exploded perspective view of a part of an electronic device 2 according to an embodiment, and FIG. 6 is an x-y plan view illustrating a part of an electronic device 2 in relation to FIG. 5 in an embodiment.

With reference to FIGS. 5 and 6, the electronic device 2 may include a first front case 610, a second front case 620, a hinge assembly 630, a first support plate 641, and/or a second support plate 642. The first front case 610 may include a first lateral bezel structure 212 and a first support structure (or first support member) 611. The first support structure 611 may be located inside the first housing 21 (refer to FIG. 2), and may be connected with the first lateral bezel structure 212, or may be integrally formed with the first lateral bezel structure 212. The second front case 620 may include a second lateral bezel structure 222 and a second support structure (or second support member) 612. The second support structure 612 may be located inside the second housing 22 (refer to FIG. 2), and may be connected to the second lateral bezel structure 222, or may be integrally formed with the second lateral bezel structure 222. The first support structure 611 and the second support structure 612 may be a frame structure located inside electronic device 2 so as to endure a load, and may contribute to durability or rigidity of the electronic device 2. The first support structure 611 and/or the second support structure 612 may be formed of, for example, a metal material and/or a non-metal material (e.g., polymer). The first support structure 611 may be a part on which constituent elements, such as a display, a printed circuit board, or a battery, are disposed in the first housing 21, and may be referred to as, for example, a first bracket or a first mounting plate. The second support structure 612 may be a part on which constituent elements, such as a display, a printed circuit board, or a battery, are disposed in the second housing 22, and may be referred to as, for example, a second bracket or a second mounting plate. In a certain embodiment, the first support structure 611 or the first front case 610 may be defined as a constituent element of the first housing 21, and the second support structure 612 or the second front case 620 may be defined as a constituent element of the second housing 22.

According to an embodiment, the hinge assembly 630 (e.g., folding part) includes a first hinge 631, a second hinge 632, and/or a hinge housing 40. The first front case 610 and the second front case 620 may be mutually rotatable based on a rotation axis (e.g., folding axis C of FIG. 2) by the first hinge 631 and the second hinge 632. The first hinge 631 and the second hinge 632 may connect the first support structure 611 and the second support structure 612 with each other. For example, the first hinge 631 may include a first part (or first hinge arm) 631a combined with the first support structure 611, a second part (or second hinge arm) 631b combined with the second support structure 612, and a third part 631c connected to the first part 631a and the second part 631b. The first part 631a and the second part 631b may be rotatably connected to the third part 631c. In an embodiment, the first part 631a, the second part 631b, and the third part 632c may be dynamically connected by using a gear assembly (or gear structure). For example, the gear assembly may include an assembly in which, gears, such as circular gears or conical gears, are engaged with each other, and may enable rotation of the first part 631a and/or the second part 631b against the third part 632c. For example, the folding axis C of FIG. 2 may be substantially formed by the gear assembly. In an embodiment, the gear assembly may contribute to the rotation of the first part 631a and the second part 631b in opposite directions at the same angle based on the third part 631c during the state change (e.g., switchover between the unfolded state of FIG. 2 and the folded state of FIG. 3) of the electronic device 2. In a certain embodiment, the hinge implemented to include the gear assembly may be referred to as a "gear hinge". The second hinge 632 may be implemented substantially in the same manner as the first hinge 631, and may include a first part 632a, a second part 632b, and a third part 632c. The first front case 610 combined with the first part 631a of the first hinge 631 and the first part 632a of the second hinge 632 and the second front case 620 combined with the second part 631b of the first hinge 631 and the second part 632b of the second hinge 632 may be mutually rotatable around the third part 631c of the first hinge 631 and the third part 632c of the second hinge 632. The location or the number of hinges is not limited to the illustrated example, but may vary.

According to an embodiment, the first hinge 631 may include an elastic structure for applying elasticity to the rotation of the first part 631a for the third part 631c and the rotation of the second part 621b for the third part 631c. For example, the elastic structure may apply a force to the operation of the gear assembly included in the first hinge 631. For example, the elastic structure may be implemented to include a torsion spring 631d. The second hinge 632 may include an elastic structure implemented substantially in the same manner as the elastic structure included in the first hinge 631. The elastic structure included in the first hinge 631 and the elastic structure included in the second hinge 632 may apply a force for smoothing the state change (e.g., switchover between the unfolded state of FIG. 2 and the folded state of FIG. 3) of the electronic device 2 (e.g., semiautomatic state change). For example, if the first housing 21 and the second housing 22 are changed from a first state (e.g., unfolded state of FIG. 2) in which the first housing 21 and the second housing 22 form an angle of about 180 degrees to a state in which the first housing 21 and the second housing 22 form an angle that is smaller than a reference angle (e.g.,, about 90 degrees) due to an elastic structure included in the first hinge 631 and an elastic structure included in the second hinge 632, the state is automatically changed to a second state (e.g., folded state of FIG. 3) in which the first housing 21 and the second housing 22 form an angle of about 0 to 10 degrees even with no more external force. For example, if the applied external force is released after the state is changed from the first state (e.g., unfolded state) to the state in which the angle that is equal to or larger than the reference angle (e.g., about 90 degrees) is formed due to the elastic structure included in the first hinge 631 and the elastic structure included in the second hinge 632, the state may automatically return to the first state (e.g., unfolded state of FIG. 2). For example, if the state is changed from the second state (e.g., folded state of FIG. 3) to the state in which the angle that is larger than the reference angle (e.g., about 90 degrees) due to the elastic structure included in the first hinge 631 and the elastic structure included in the second hinge 632, the state is automatically changed to the first state (e.g., unfolded state of FIG. 2) even with no more external force. For example, if the applied external force is released after the state is changed from the second state (e.g., folded state) to the state in which the angle that is equal to or smaller than the reference angle is formed, the state may automatically return to the second state.

According to an embodiment, the hinge housing 40 may be combined with the third part 631c of the first hinge 631 and the third part 632c of the second hinge 632. The first front case 610 may include the first cover member 651, and the second front case 620 may include the second cover member 652. The first cover member 651 may be connected to the first support structure 611, or may be integrally formed with the first support structure 611. The second cover member 652 may be connected to the second support structure 612, or may be integrally formed with the second support structure 612. For example, the first cover member 651 and the second cover member 652 may be formed in a curved shape that includes a curved part corresponding to the curved surface included in the hinge housing 40. In a certain embodiment, the first cover member 651 may be referred to as a first curved member or a second curved cover, and the second cover member 652 may be referred to as a second curved member or a second curved cover. In the unfolded state (refer to FIG. 2) of the electronic device 2, the first cover member 651 and the second cover member 652 may cover the hinge housing 40, and the hinge housing 40 may not be substantially exposed to the outside. In the folded state (refer to FIG. 3) of the electronic device 2, the hinge housing 40 may be exposed to the outside between the first cover member 651 and the second cover member 652.

According to an embodiment, the hinge housing 40 may include a recess for disposing the pen input device 50 (refer to FIG. 4). The recess may be formed not to interfere with constituent elements included in the electronic device 2. For example, the recess may be located between the first hinge 631 and the second hinge 632. The hinge housing 40 including the recess for accommodating the pen input device 50 will be described hereinafter with reference to the drawings.

According to an embodiment, the first support plate 641 may be combined with the first support structure 611, and the second support plate 642 may be combined with the second support structure 612. The first support plate 641 and the second support plate 642 may be located between the first hinge 631 and the second hinge 632. For example, in the unfolded state (refer to FIG. 2) of the electronic device 2, the first support plate 641 and the second support plate 642 may form an angle of about 180 degrees. For example, in the folded state (refer to FIG. 3) of the electronic device 2, the first support plate 641 and the second support plate 642 may be spaced apart from each other to overlap each other, and may be disposed substantially in parallel to each other. At least one electrical path 800 may electrically connect a first printed circuit board located in the first housing 21 (refer to FIG. 2) and a second printed circuit board located in the second housing 22 (refer to FIG. 2) with each other. A signal (e.g., command or data) between the first printed circuit board and the second printed circuit board may be transmitted through at least one electrical path 800. For example, the at least one electrical path 800 may include a flexible printed circuit board (FPCB) or a rigid flexible printed circuit board (RFPCB) extending from the first housing 21 to the second housing 22. The at least one electrical path 800 may be combined with the first support plate 641 and the second support plate 642, and may be supported by the first support plate 641 and the second support plate 642. The at least one electrical path 800 may include a second part combined with the first support plate 641, a third part combined with the second support plate 642, and a first part between the second part and the third part. The first part may be located to correspond to the hinge assembly. The first part may be disposed to be bent in accordance with the state change (e.g., switchover between the unfolded state of FIG. 2 and the folded state of FIG.3) of the electronic device 2.

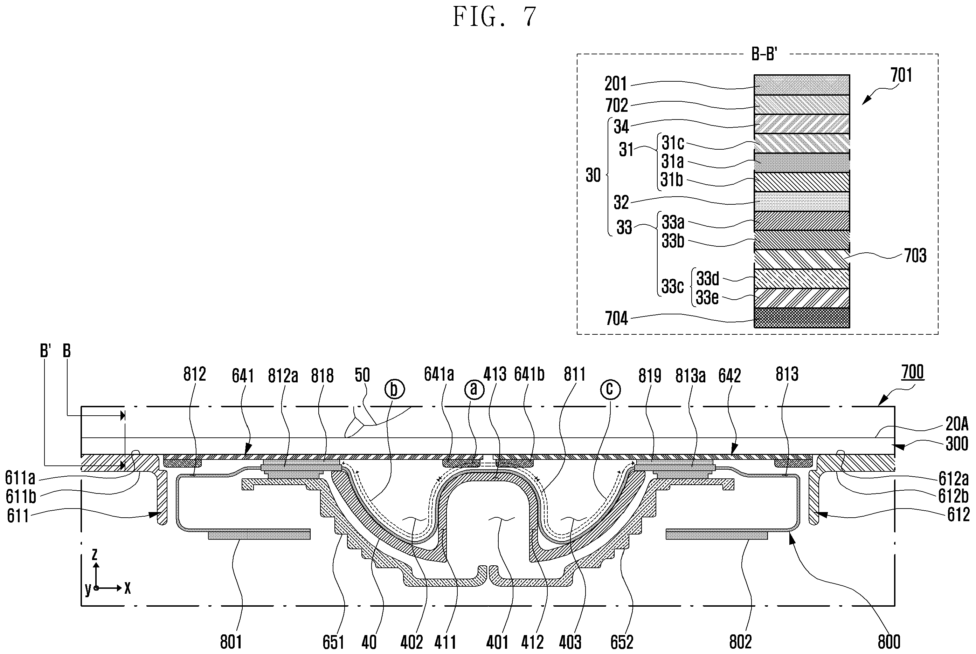

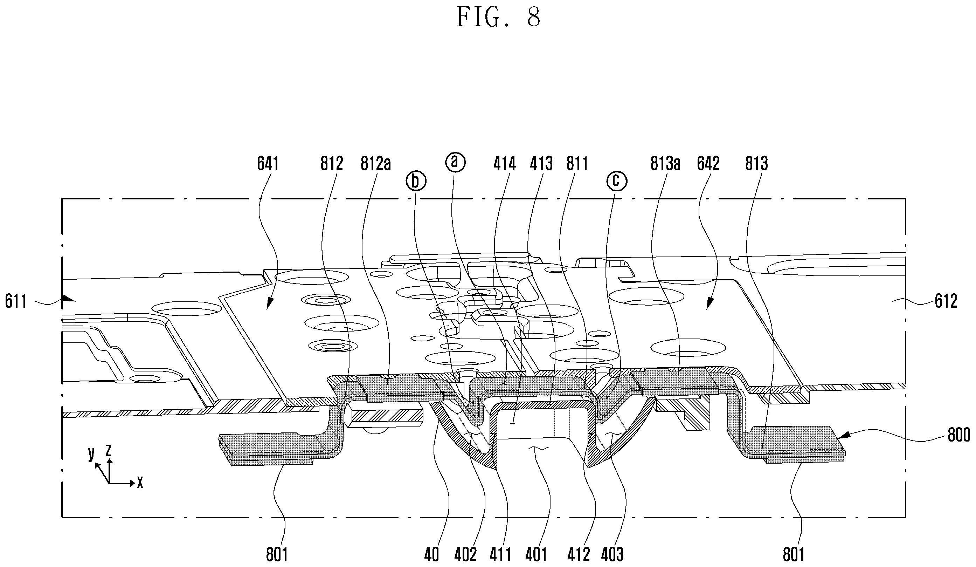

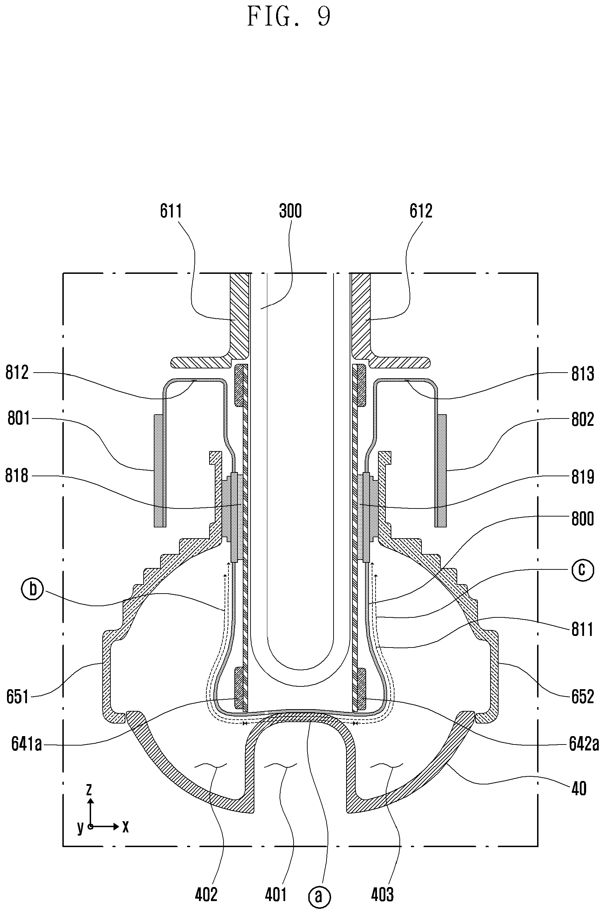

FIG. 7 illustrates a cross-sectional structure 700 taken along line A-A' of FIG. 2 in an embodiment. FIG. 8 is a partial cross-sectional perspective view illustrating a part of an electronic device 2 in relation to FIG. 7 in an embodiment. FIG. 9 illustrates a cross-sectional structure 900 of an electronic device in a folded state in relation to FIG. 7 in an embodiment.

With reference to FIGS. 7, 8, and 9, the electronic device 2 may include a display assembly 300, a first support structure 611, a second support structure 612, a first cover member 651, a second cover member 652, a hinge housing 40, an electrical path 800, a first support plate 641, and/or a second support plate 642.

The display assembly 300 (refer to a cross-sectional structure 701 taken along line B-B' of FIG. 7) may include, for example, a flexible display 30, a front cover 201, an optical transparent adhesive member 702, an electromagnetic induction panel 703, and/or a support sheet 704. The flexible display 30 may be combined with the front cover 201 by using the optical transparent adhesive member 702 (e.g., optical clear adhesive (OCA), optical clear resin (OCR), or super view resin (SVR)). The front cover 201 (e.g., window) may protect the flexible display 30 from the outside by covering the flexible display 30. The front cover 201 may be implemented in the form of a thin film (e.g., thin film layer) having flexibility. For example, the front cover 201 may include a plastic film (e.g., polyimide film) or a thin film glass (e.g., ultra-thin glass). In a certain embodiment, the front cover 201 may include a plurality of layers. For example, the front cover 201 may be in the form in which various coated layers are disposed on the plastic film or the thin film glass. For example, the front cover 201 may be in the form in which at least one protection layer or coated layer including a polymer material (e.g., polyester (PET), polyimide (PI), or thermoplastic polyurethane (TPU)) is disposed on the plastic film or the thin film glass.

For example, the flexible display 30 may include a display panel 31, a base film 32, a lower panel 33, or an optical layer 34. The display panel 31 may be located between the optical layer 34 and the base film 32. The base film 32 may be located between the display panel 31 and the lower panel 33. The optical layer 34 may be located between the optical transparent adhesive member 702 and the display panel 31. Various polymer adhesive members (not illustrated) may be disposed between the display panel 31 and the base film 32, between the base film 32 and the lower panel 33, and/or between the display panel 31 and the optical layer 34. The display panel 31 may include, for example, a light-emitting layer 31a, a thin film transistor (TFT) film 31b, and/or an encapsulation (e.g., thin-film encapsulation (TFE)) 31c. The light-emitting layer 31a may include, for example, a plurality of pixels implemented as a light-emitting element, such as an OLED or a micro LED. The light-emitting layer 31a may be disposed on the TFT film 31b through organic evaporation. The TFT film 31b may be located between the light-emitting layer 31a and the base film 32. The TFT film 31b may indicate a film structure in which at least one TFT is disposed on a flexible board (e.g., PI film) through a series of processes, such as deposition, patterning, and etching. The at least one TFT may turn on/off the pixel or adjust the brightness of the pixel by controlling current for the light-emitting element of the light-emitting layer 31a. For example, the at least one TFT may be implemented by amorphous silicon (a-Si) TFT, liquid crystalline polymer (LCP) TFT, low-temperature polycrystalline oxide (LTPO) TFT, or low-temperature polycrystalline silicon (LTPS) TFT. The display panel 31 may include a storage capacitor, and the storage capacitor may maintain a voltage signal for the pixel, maintain a voltage input to the pixel in one frame, or reduce a gate voltage change of the TFT due to current leakage for a light-emitting time. By a routine (e.g., initialization and data write) for controlling at least one TFT, the storage capacitor may maintain the voltage applied to the pixel at predetermined time intervals. In an embodiment, the display panel 31 may be implemented based on an OLED, and the encapsulation 31c may cover the light-emitting layer 31a. Since an organic material that emits light and an electrode in the OLED may react very sensitively on oxygen and/or moisture, and thus light-emitting characteristics thereof may be lost. The encapsulation 31c may seal the light-emitting layer 31a so that the oxygen and/or moisture do not penetrate into the OLED. The base film 32 may include a flexible film formed of polymer, such as polyimide or polyester (PET) or plastic. The base film 32 may serve to support and protect the display panel 31. In a certain embodiment, the base film 32 may be referred to as a protective film, a back film, or a back plate.

The lower panel 33 may include a plurality of layers for various functions. Between the plurality of layers included in the lower panel 33, various polymer adhesive members (not illustrated) may be disposed. For example, the lower panel 33 may include a shading layer 33a, a buffer layer 33b, or a lower layer 33c. The shading layer 33a may be located between the base film 32 and the buffer layer 33b. The buffer layer 33b may be located between the shading layer 33a and the lower layer 33c. The shading layer 33a may block at least a part of light incident from outside. For example, the shading layer 33a may include an embo layer. The embo layer may be a black layer including a bumpy pattern. The buffer layer 33b may buffer an external impact being applied to the flexible display 30. For example, the buffer layer 33b may include a sponge layer or a cushion layer. The lower layer 33c may diffuse, dissipate, or insulate heat generated from the electronic device 2 or the flexible display 30. The lower layer 33c may absorb or shield electromagnetic waves. The lower layer 33c may mitigate an external impact being applied to the electronic device 2 or the flexible display 30. For example, the lower layer 33c may include a composite sheet 33d or a conductive sheet 33e. In an embodiment, the composite sheet 33d may be a sheet obtained by combining and processing layers or sheets having different properties. For example, the composite sheet 33d may include at least one of polyimide or graphite. The composite sheet 33d may be replaced by a single sheet including one material (e.g., polyimide or graphite). The composite sheet 33d may be located between the buffer layer 33b and the conductive sheet 33e. The conductive sheet 33e may serve to shield electromagnetic interference (EMI) against the flexible display 30. The conductive sheet 33e may include various other metal materials (e.g., copper). In a certain embodiment, at least a part of the lower layer 33c may be a conductive member (e.g., metal plate), and may be used to help rigidity reinforcement of the electronic device 2, to shield ambient noises, and to dissipate the heat emitted from a neighboring heat emitting component (e.g., display driving circuit (e.g., DDI)). The conductive member may include, for example, at least one of copper (Cu), aluminum (Al), stainless steel (SUS), or CLAD (laminated member on which SUS and Al are alternately disposed). The lower layer 33c may include various layers for other various functions. According to various embodiments (not illustrated), on the rear surface of the display panel 31, at least one additional polymer layer (e.g., layer including PI, PET, or TPU) may be further disposed in addition to the base film 32. In various embodiments, at least one of a plurality of layers (e.g., shading layer 33a, buffer layer 33b, composite sheet 33d, and conductive sheet 33e) included in the lower panel 33 may be omitted. In various embodiments, the disposition order of the plurality of layers included in the lower panel 33 may not be limited to the illustrated examples, but may be variously changed.

The optical layer 34 may include, for example, a polarizing layer (or polarizer) or a retardation layer (or retarder). The polarizing layer and the retardation layer may improve outdoor visibility of a screen. For example, the optical layer 34 may selectively pass the light that is generated from the light source of the display panel 31 and vibrates in a predetermined direction. In a certain embodiment, one layer obtained by merging the polarizing layer and the retardation layer may be provided, and such a layer may be defined as a "circular polarization layer". The optical transparent adhesive member 36 may be located between the front cover 201 and the optical layer 34. In a certain embodiment, the polarizing layer (or circular polarization layer) may be omitted, and in this case, a block pixel define layer (PDL) and/or a color filter may be included in replacement of the polarizing layer.

The display assembly 300 may include a touch sensing circuit (e.g., touch sensor) (not illustrated). The touch sensing circuit may be implemented by a transparent conductive layer (or film) based on various conductive materials, such as indium tin oxide (ITO). In an embodiment, the touch sensing circuit may be disposed between the front cover 201 and the optical layer 34 (e.g., add-on type). In another embodiment, the touch sensing circuit may be disposed between the optical layer 34 and the display panel 31 (e.g., on-cell type). In another embodiment, the display panel 31 may include a touch sensing circuit or a touch sensing function (e.g., in-cell type). In a certain embodiment, the display panel 31 may be based on the OLED, and may include the encapsulation 31c disposed between the light-emitting layer 31a and the optical layer 34. The encapsulation 31c may serve as a pixel protection layer for protecting the plurality of pixels of the light-emitting layer 31a. In an embodiment (not illustrated), the flexible display 30 may include a conductive pattern, such as a metal mesh (e.g., aluminum metal mesh), as the touch sensing circuit disposed on the encapsulation 31c between the encapsulation 31c and the optical layer 34. For example, in response to the flexing of the flexible display 30, the metal mesh may have higher durability than that of the transparent conductive layer implemented by ITO. In a certain embodiment, the flexible display 30 may further include a pressure sensor (not illustrated) that can measure the strength (pressure) of a touch. The plurality of layers included in the display panel 31 or the lower panel 33 may have various lamination structures or lamination orders. Depending on the trend of the providing type or convergence, the flexible display 30 may be implemented through omission of some of the constituent elements or through addition of other constituent elements.

According to an embodiment, the electromagnetic induction panel (e.g., digitizer) 703 may be located between the buffer layer 33b and the lower layer 33c. In a certain embodiment, the electromagnetic induction panel 703 may be located between the composite sheet 33d and the conductive sheet 33e of the lower layer 33c. In a certain embodiment, the electromagnetic induction panel 703 may be located between the shading layer 33a and the buffer layer 33b. The electromagnetic panel 703 may be implemented in the form of a flexible film or a flexible sheet. For example, the electromagnetic induction panel 703 may be formed as a flexible printed circuit board. If an AC is supplied to the electromagnetic induction panel 703, an electromagnetic field may be formed by a plurality of electrode patterns included in the electromagnetic induction panel 703. The pen input device 50 may be implemented by an electromagnetic induction method (e.g., electromagnetic resonance (EMR) method). The pen input device 50 may include a resonance circuit, and the resonance circuit may interwork with the electromagnetic induction panel 703. If a pen tip of the pen input device 50 becomes close to the first surface 20A of the electronic device 2, current may flow in a coil included in the resonance circuit of the pen input device 50 by electromagnetic induction. The coil included in the resonance circuit of the pen input device 50 may be implemented by, for example, the flexible printed circuit board. The pen input device 50 may generate a signal (e.g., radio frequency signal) (e.g., location signal, pen pressure signal, and/or angle signal) about a user input on the screen by using energy that is supplied from the electromagnetic induction panel 703, and may transmit the generated signal to the screen (e.g., electromagnetic induction panel 703). The electromagnetic induction panel 703 may include a shield sheet. The shield sheet may be located on the rear surface (e.g., in the illustrated embodiment, a surface of the flexible printed circuit board that faces the conductive sheet 33e) of the flexible printed circuit board including the plurality of electrode patterns. The shield sheet may prevent interference between components included in the electronic device 2 due to the electromagnetic field generated from the components. The shield sheet may enable an input from the pen input device 50 to be accurately transferred to the coil included in the electromagnetic induction panel 703 by blocking the electromagnetic field generated from the components. In a certain embodiment, the electromagnetic induction panel 703 may be defined as a partial constituent element of the flexible display 30. According to a certain embodiment, the pen input device 50 may be implemented in an active electrical stylus (AES) method or an electric coupled resonance (ECR) method. In this case, the electromagnetic induction panel 703 may be omitted.

According to various embodiments, the display assembly including the sub-display 310 (refer to FIG. 2 or 3) may be located to correspond to the third cover area ③, and may be implemented to include at least a part of the display assembly 300. In a certain embodiment, the display assembly including the sub-display 310 may be implemented by omitting some of the constituent elements included in the cross-sectional structure 701 or by adding one or more other constituent elements.

According to an embodiment, the pen input device 50 may include a pen tip sensor. The pen tip sensor may include, for example, a pen tip, and may serve as a pointer that points the location (or coordinate) of the pen input device 50 and a pen pressure detector that senses a pen pressure (or pressure sensitivity) (e.g., amount of pressing force in order to adjust the line thickness). When a user input is taken on the screen of the electronic device 2 with the pen input device 50, the pen tip sensor may point a portion where a location signal on the screen and a pen pressure signal are generated. The processor (e.g., processor 120 of FIG. 1) may receive the location signal and the pen pressure signal generated by the pen tip sensor through the screen, and may grasp the location (coordinate) and the pen pressure of the user input on the screen. In a certain embodiment, the pen tip sensor may generate an angle signal, and the processor may grasp the angle of the pen input device against the screen through reception of the angle signal from the pen tip sensor through the screen. The pen tip sensor may be implemented in various methods for generating a signal (e.g., location signal, pen pressure signal, and/or angle signal) about the user input on the screen. Hereinafter, in this document, a part of the electronic device 2 excluding the pen input device 50 may be referred to as a host device for interaction with the pen input device 50, but is not referred to through a separate drawing reference symbol.

According to an embodiment, when the user input is taken on the screen of the host device with the pen input device 50, the pen tip sensor may be implemented to generate the signal (e.g., location signal, pen pressure signal, and/or angle signal) about the user input on the screen through being provided with energy from the screen. The pen tip sensor may operate in the electromagnetic induction method (e.g., EMR method), and may include, for example, a core (e.g., magnetic body or ferrite) connected to the pen tip and a coil disposed on the core. If an AC is supplied to the electromagnetic induction panel 703 of the host device, the electromagnetic induction panel 703 may form a magnetic field on the screen. If the pen tip sensor becomes close to the screen of the host device, current may flow in the coil of the pen tip sensor by the electromagnetic induction. The signal (e.g., location signal, pen pressure signal, and/or angle signal) about the user input on the screen may be generated by the pen tip sensor by using the energy supplied from the electromagnetic induction panel 703.

According to a certain embodiment, the pen tip sensor may be implemented to generate the electrostatic signal (e.g., location signal, pen pressure signal, and/or angle signal) about the user input on the screen by using a power of a battery included in the pen input device 50. For example, the pen tip sensor may generate an electrostatic signal (e.g., signal distinguished from the user's hand or finger) about the user input by using the power of the battery included in the pen input device 50 (e.g., AES method). In a certain embodiment, the pen tip sensor may transmit or receive various communication signals, such as identification degrees, about the host device through the screen. In the embodiment in which the pen tip sensor generates the electrostatic signal by using the power of the battery included in the pen input device 50, the electromagnetic induction panel 703 of the host device may be omitted. The pen tip sensor may be implemented in other various methods, and may generate the signal (e.g., location signal, pen pressure signal, and/or angle signal) about the user input on the screen.

According to an embodiment, when the user input is taken on the screen of the host device with the pen input device 50, the pen tip may move and pressurize a pen pressure switch included in the pen input device 50. The pen input device 50 may generate a pen pressure signal based on the signal detected by the pen pressure switch. In a certain embodiment, when the user input is taken on the screen of the host device with the pen input device 50, a change of capacitance may occur, and the pen pressure signal may be generated based on such a change of capacitance. The change of the capacitance may occur during movement of the pen tip.

According to an embodiment, various components for supporting a charging function, a communication function, and/or a sensor function may be disposed in the pen input device 50. For example, the pen input device 50 may include various sensor modules, such as a wireless communication module (e.g., Bluetooth communication module) or a motion sensor. In an embodiment, a first communication controller configured to perform first wireless communication with the host device through the pen tip sensor may be disposed in the pen input device 50. For example, when the user input is taken on the screen of the host device with the pen input device 50, the first communication controller may transmit a radio frequency signal about the location signal, pen pressure signal, and/or angle signal to the screen of the host device through the pen tip sensor.

When the user input is taken on the screen of the host device with the pen input device 50, the pen tip sensor may generate the current through reception of the magnetic field coming out from the screen of the host device, and the first communication controller (e.g., EMR communication controller) may generate the radio frequency signal related to the location signal, pen pressure signal, and/or angle signal through the pen tip sensor by using the generated current, and may transmit the generated radio frequency signal to the screen of the host device. According to another embodiment, when the user input is taken on the screen of the host device with the pen input device 50, the pen tip sensor may generate the current through reception of the signal coming out through a touch sensing circuit (e.g., touch screen panel (TSP)) of the flexible display 30. The first communication controller may generate a transmission signal through the pen tip sensor by using the generated current, and may transmit the generated transmission signal to the host device. In a certain embodiment, the pen tip sensor may be implemented, by itself, to generate the current through reception of the signal coming out through the screen of the host device, and to perform the first wireless communication for transmitting the transmission signal (Tx signal) to the host device by using the generated current. For example, the pen tip sensor may generate the current by using the signal coming out through the electromagnetic induction panel 703 or the touch sensing circuit of the flexible display, and may transmit the transmission signal to the host device by using the generated current.

According to an embodiment, the pen input device 50 may include at least one antenna and a second communication controller configured to perform second wireless communication with the host device through the at least one antenna. The second wireless communication may include a short-range communication, and for example, may include Bluetooth low energy (BLE) communication or near field communication (NFC). In a certain embodiment, a signal from the motion sensor included in the pen input device may be transmitted to the host device through the first wireless communication or the second wireless communication.

According to an embodiment, the pen input device 50 may include a button exposed to outside. For example, if the button is pressed by an external force, a corresponding signal is generated. An input device included in the pen input device 50 may be implemented in other various methods. For example, the input device may be implemented based on various user input detection elements, such as a pressure sensor capable of detecting the user input, a touch sensor, or an ultrasonic sensor. In various embodiments, the button may include the pressure sensor, touch sensor, optical sensor, strain gauge, or user input detection element based on a magnetic material.

According to an embodiment, the pen input device 50 may include a power management controller. In a state where the pen input device 50 is attached to the hinge housing 40 of the host device, the power management controller may wirelessly receive the power (or charging signal) from the host device, and may charge the battery included in the pen input device 50. In a state where the pen input device 50 is attached to the host device, the power management controller may wirelessly receive the charging signal from the host device through the pen tip sensor, and may charge the battery included in the pen input device 50. For example, if a magnetic field flowing through an antenna (e.g., coil) of the host device is applied to the coil of the pen input device 50 in a state where the pen input device 50 is attached to the host device, induced current flows through the coil of the pen input device 50, and the power management controller may charge the battery of the pen input device 50 by using the induced current.

According to an embodiment, the support sheet 704 may be attached to the rear surface of the lower panel 33 while at least partly covering the lower panel 33 of the flexible display 30. The support sheet 704 may contribute to durability of the display assembly 300 or the flexible display 30. For example, the support sheet 704 may reduce an influence that a load or stress that may occur during the switchover between the unfolded state of FIG. 2 and the folded state of FIG. 3 exerts on the flexible display 30. The support sheet 704 may be formed of various metal materials and/or a non-metal material (e.g., polymer). For example, the support sheet 704 may include stainless steel. As another example, the support sheet 704 may include engineering plastic. In a certain embodiment, the support sheet 704 may be implemented integrally with the flexible display 30. In a certain embodiment, the support sheet 704 may be omitted.

According to an embodiment, the support sheet 704 may include a lattice structure formed on a part corresponding to the folding cover area F (refer to FIG. 2). For example, the lattice structure may include a plurality of openings (or slits). For example, the plurality of openings may be periodically formed, may have substantially the same form, and may be repeatedly arranged at predetermined intervals. In a certain embodiment, the support sheet 704 may include a recess pattern (not illustrated) including a plurality of recesses in replacement of the lattice structure. In various embodiments, the lattice structure or the recess pattern that contributes to the flexibility of the flexible display 30 may be further expanded to other parts. In a certain embodiment, the support sheet 704 including the lattice structure or the recess pattern or the corresponding conductive member may be formed as a plurality of layers.

According to an embodiment, a part of the display assembly 300 may be disposed on one surface 611a of the first support structure 611, and the other part of the display assembly 300 may be disposed on one surface 612a of the second support structure 612. For example, the display assembly 300 may be combined with the first support structure 611 and the second support structure 612 by using a heat-reactive adhesive material, a photo-reactive adhesive material, a general adhesive, and/or a double-sided tape.

According to an embodiment, the first support plate 641 combined with the first support structure 611 and the second support plate 642 combined with the second support structure 612 may support a partial area of the display assembly 300 corresponding to the folding cover area F in the open state (refer to FIG. 2) of the electronic device 2.

According to an embodiment, the host device may include a first printed circuit board (e.g., PCB or PBA) disposed on the other surface 611b of the first support structure 611 between the first support structure 611 and the first rear cover 211 (refer to FIG. 2). The host device may include a first battery disposed on the other surface 611b of the first support structure 611 between the first support structure 611 and the first rear cover 211 (refer to FIG. 2).

According to an embodiment, the host device may include a second printed circuit board (e.g., PCB or PBA) disposed on the other surface 612b of the second support structure 612 between the second support structure 612 and the second rear cover 221 (refer to FIG. 2). The host device may include a second battery disposed on the other surface 612b of the second support structure 612 between the second support structure 612 and the second rear cover 221 (refer to FIG. 2).

According to a certain embodiment, the first printed circuit board disposed on the first support structure 611 or the second printed circuit board disposed on the second support structure 612 may include a primary PCB (or main PCG), a secondary PCB (or slave PCB) disposed to partially overlap the primary PCB, and/or an interposer substrate between the primary PCB and the secondary PCB.

According to an embodiment, the electronic path 800 may electrically connect the first printed circuit board disposed on the first support structure 611 and the second printed circuit board disposed on the second support structure 612 with each other. For example, one end part 801 of the electrical path 800 may include a first connector for being electrically connected with the first printed circuit board, and the other end part 802 of the electrical path 800 may include a second connector for being electrically connected with the second printed circuit board.

According to an embodiment, the electrical path 800 may include a first part 811 corresponding to the folding cover area F, a second part 812 extending from the first part 811 to the first housing 21 (refer to FIG. 2), and a third part 813 extending from the first part 811 to the second housing 22 (refer to FIG. 2). The first part 811 may be flexible, and may be disposed to be flexed in accordance with the state change (e.g., switchover between the unfolded state of FIG. 2 and the folded state of FIG. 3) of the electronic device 2. The second part 812 may be combined with the first support plate 641 by using the first adhesive member 818 of various polymers. The third part 813 may be combined with the second support plate 642 by using the second adhesive member 819 of various polymers.

According to an embodiment, a part 812a of the second part 812 combined with the first support plate 641 may be substantially rigid, and the other part of the second part 812 may be flexible. A part 813a of the third part 813 combined with the second support plate 642 may be substantially rigid, and the other part of the third part 813 may be flexible. For example, the electrical path 800 may be in the form of including a flexible part and a rigid part or in the form of including a plurality of parts having different flexibilities, and for example, may include a flexible printed circuit board (FPCB) or a rigid flexible printed circuit board (RFPCB).

According to an embodiment, the hinge housing 40 includes a first recess 401. The first recess 401 includes a recess-shaped space so that the pen input device 50 is disposed therein. For example, in case that the first cover member 651 and the second cover member 652 are disposed not to hide the first recess 401 as in the folded state (refer to FIG. 9) of the electronic device 2, the first recess 401 may be exposed to the outside so as to make it possible to insert the pen input device 50 therein.

According to an embodiment, the hinge housing 40 may include a second recess 402 that is separated from the first recess 401. The hinge housing 40 may include a third recess 403 that is separated from the first recess 401. The second recess 402 and the third recess 403 may be located inside the host device and may not to be exposed to the outside. The hinge housing 40 may include a first wall 411 between the first recess 410 and the second recess 402. The first recess (or first space part) 401 and the second recess (or second space part) 402 may be separated from each other by the first wall 411. The hinge housing 40 may include a second wall 412 between the first recess 401 and the third recess 403. The first recess (or first space part) 401 and the third recess (or third space part) 403 may be separated from each other by the second wall 412. The first wall 411 and the second wall 412 may face each other with the first recess 401 interposed therebetween. The hinge housing 40 may include a third wall 413 connecting the first wall 411 and the second wall 412 with each other. If the pen input device 50 is disposed in the first recess 401, a partial area (e.g., refer to drawing reference symbol "50a" of FIG. 4) of a side surface of the pen input device 50 may be exposed to the outside, and may form an outer surface of the electronic device 2 together with the hinge housing 40, and the other partial area of the lateral surface of the pen input device 50 may face the first wall 411, the second wall 412, and the third wall 413. The pen input device 50 may include a pen shape including a forepart including the pen tip and a back part extending from the forepart. The lateral surface of the pen input device 50 may indicate, for example, a surface surrounding at least a part of a space between the forepart and the back part. The hinge housing 40 may include a fourth wall 414 corresponding to the back part of the pen input device 50 and a fifth wall (not illustrated) corresponding to the forepart of the pen input device 50. The first recess 401 may be formed by the first wall 411, the second wall 412, the third wall 413, the fourth wall 415, and the fifth wall. The first recess 401 may have various shapes depending on an external appearance of the pen input device 50, and thus the first wall 411, the second wall 412, the third wall 413, the fourth wall 415, and the fifth wall are not limited to the illustrated example, but may differ. For example, a connection part between the first wall 411 and the third wall 413 and the connection part between the second wall 412 and the third wall 413 may be curved.

According to an embodiment, a first area ⓐ of the first part 811 of the electrical path 800 may face the third wall 413 of the hinge housing 40. In a certain embodiment, the first area ⓐ may be combined with the third wall 413 by using an adhesive material. The adhesive material may include, for example, a heat-reactive adhesive material, a photo-reactive adhesive material, a general adhesive, and/or a double-sided tape.

According to a certain embodiment, the first area ⓐ of first part 811 of the electrical path 800 may be substantially rigid.

According to a certain embodiment, in the unfolded state (refer to FIG. 8) of the electronic device 2, the first support plate 641 or the second support plate 642 may be formed not to overlap the first part 811 of the electrical path 800 at least partly. For example, the first support plate 641 or the second support plate 642 may include a notch type opening corresponding to the first part 811 of the electrical path 800.

According to an embodiment, a second area ⓑ of the first part 811 of the electrical path 800 may be disposed in the form of being inserted into the second recess 402 in the unfolded state (refer to FIGS. 7 and 8) of the electronic device 2. In the folded state (refer to FIG. 9) of the electronic device 2, the second area ⓑ of the first part 811 of the electrical path 800 may come outside the second recess 402 in response to the location relationship between the first support plate 641 and the second support plate 642, and may be disposed in a form different from the form in the unfolded state of the electronic device 2. A third area ⓒ of the first part 811 of the electrical path 800 may be disposed in the form of being inserted into the third recess 403 in the unfolded state (refer to FIGS. 7 and 8) of the electronic device 2. In the folded state (refer to FIG. 9) of the electronic device 2, the third area ⓒ of the first part 811 of the electrical path 800 may come outside the third recess 403 in response to the location relationship between the first support plate 641 and the second support plate 642, and may be disposed in a form different from the form in the unfolded state of the electronic device 2.

According to an embodiment, in order to reduce stress effects exerted on the second part 812 of the electrical path 800 during the state change (e.g., switchover between the unfolded state and the folded state) of the electronic device 2, a first buffer member 641a may be disposed on the first support plate 641. In order to reduce stress effects exerted on the third part 813 of the electrical path 800 during the state change of the electronic device 2, a second buffer member 642a may be disposed on the second support plate 642.

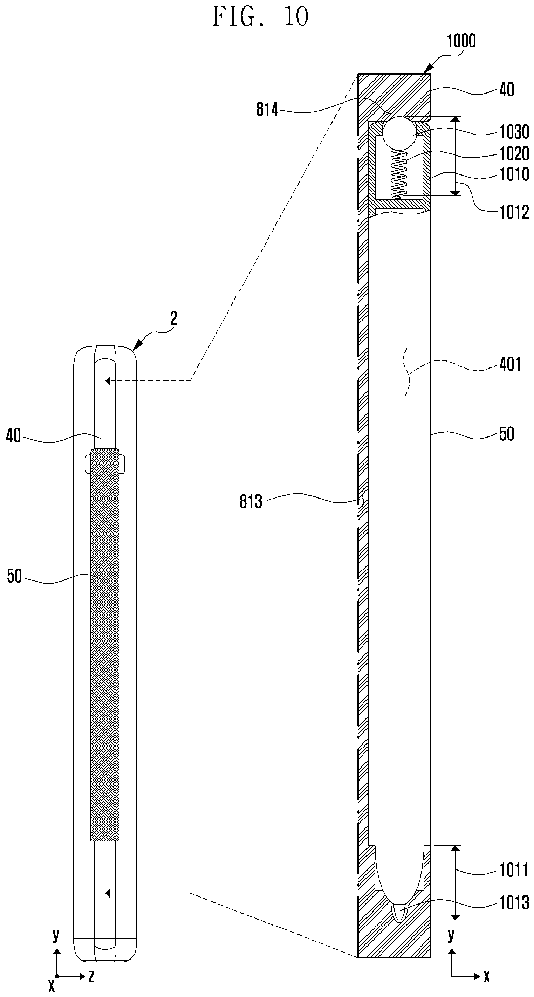

FIG. 10 illustrates a state in which a pen input device 50 is disposed in an electronic device 2 and a cross-sectional structure 1000 thereof in an embodiment.

With reference to FIG. 10, in an embodiment, a pen input device 50 may include a forepart 1011 including a pen tip 1013 and a back part 1012 including an elastic structure. The forepart 1011 may be inserted into a groove structure formed in a first recess 401 of a hinge housing 40. The elastic structure included in the back part 1012 may contribute to maintaining of a state where the pen input device 50 is disposed in the first recess 401 of the hinge housing 40. The elastic structure may contribute to the non-separation of the pen input device 50 from the first recess 401 of the hinge housing 40 due to an unintended external force (e.g., external impact). The pen input device 50 may include a pen housing 1010 that at least partly forms an external appearance of the pen input device 50. For example, the pen housing 1010 may include a straightly extended tubular housing or unibody form. The pen housing 1010 may be formed of various materials, such as ceramic, polymer, or metal, and may be substantially rigid. The pen housing 1010 may be implemented in other various forms. In an embodiment, the elastic structure included in the back part 1012 of the pen input device 50 may include an elastic member (e.g., compression spring) 1020 located in the pen housing 1010, and a press member (e.g., ball) 1030 elastically supported by the elastic member 1020. The press member supported by the elastic member 1020 may come in elastic contact with a fourth wall 814 of the hinge housing 40. A recess in which the press member 1030 is able to be fitted may be formed on the fourth wall 814. The press member 1030 may elastically press the fourth wall 814, and may enable the pen input device 50 to be not separated from the first recess 401 due to an unintended external force (e.g., external impact). By applying a force so that the press member 1030 elastically supported by the elastic member 1020 is separated from the fourth wall 814, the pen input device 50 may be separated from the first recess 401.

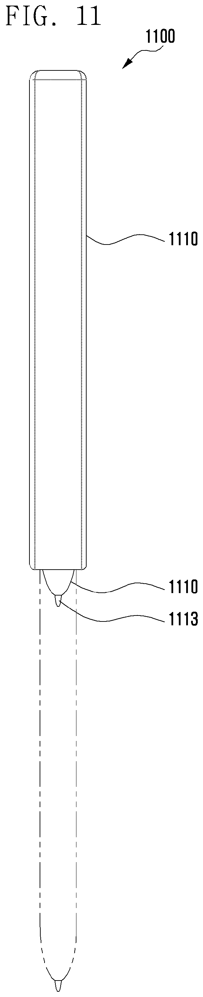

FIG. 11 illustrates a pen input device 1100 according to another embodiment.

With reference to FIG. 11, a pen input device 1100 may be implemented to reduce its length. In an embodiment, the pen input device 1100 may include a first pen housing 1110 and a second pen housing 1120 that can be drawn into the first pen housing 1110. A pen tip 1113 may be located in the second pen housing 1120. Between the first pen housing 1110 and the second pen housing 1120, a draw-out maintenance structure, which can enable the second pen housing 1120 to be drawn out from the first pen housing 1110 without being separated, and can maintain the draw-out state, may be included. For example, the draw-out maintenance structure may be implemented in various methods, such as a friction structure or a fastening structure between the first pen housing 1110 and the second pen housing 1120. The length-reducible pen input device 1100 can facilitate securing of a first recess 401 (refer to FIG. 7, 8, or 9) without interference with constituent elements (e.g., first hinge 631 and second hinge 632) around the first recess 401, and thus can contribute to space efficiency or space utilization.

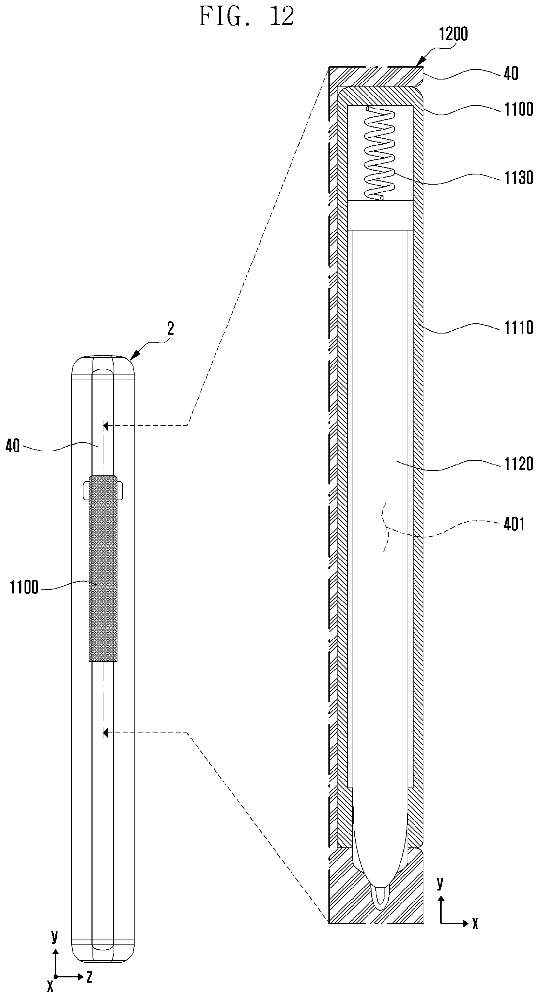

FIG. 12 illustrates a state in which the pen input device 1100 of FIG. 11 is disposed in an electronic device 2 and a cross-sectional structure 1200 thereof in an embodiment.

With reference to FIG. 12, in an embodiment, the pen input device 1100 may include an elastic member 1130 (e.g., compression spring) located inside the first pen housing 1110. The elastic member 1130 may elastically support the second pen housing 1120 between an inside of the first pen housing 1110 and the second pen housing 1120. When the pen input device 1100 in a state where the second pen housing 1120 is drawn into the first pen housing 1110 is disposed in the first recess 401 of the hinge housing 40, the elastic structure using the elastic member 1130 between the first pen housing 1110 and the second pen housing 1120 may contribute to maintaining of a state where the pen input device 1100 is disposed in the first recess 401 of the hinge housing 40.

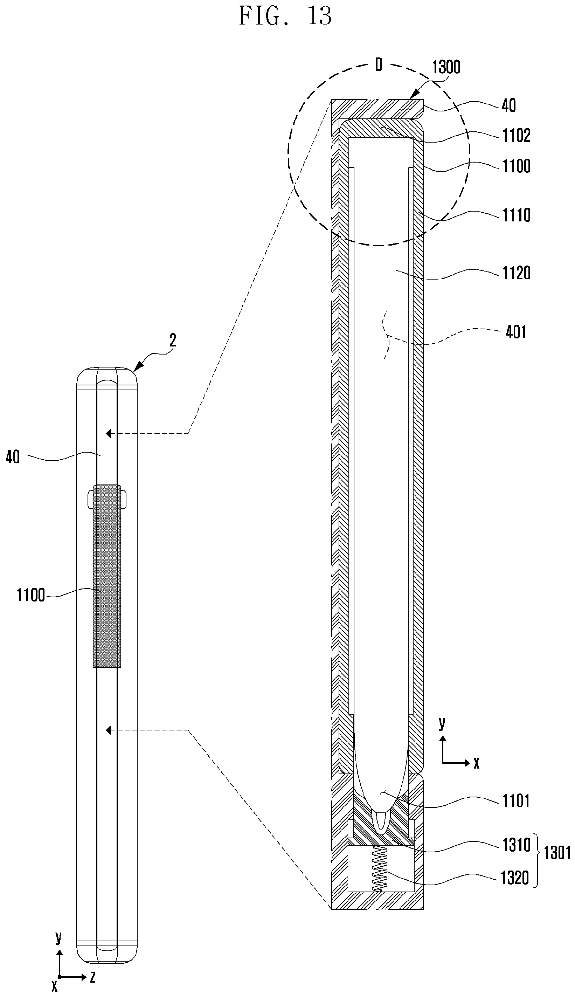

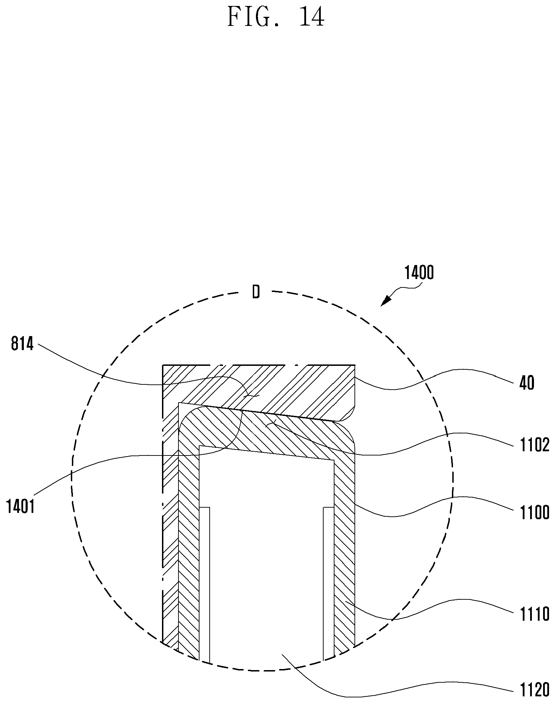

FIG. 13 illustrates a state in which the pen input device 1100 of FIG. 11 is disposed in an electronic device 2 and a cross-sectional structure 1300 thereof in another embodiment. FIG. 14 relates to another embodiment in which the example of FIG. 13 is changed or modified, and illustrates a cross-sectional structure 1300 of a part indicated by the drawing reference symbol "D".

With reference to FIG. 13, in an embodiment, the hinge housing 40 may include an elastic structure 1301 elastically supporting one side part 1101 of the pen input device 1100. The elastic structure 1301 may contribute to maintaining of a state where the pen input device 1100 is disposed in the first recess 401 of the hinge housing 40. For example, the elastic structure 1301 may include a press member 1310 and an elastic member 1320 (e.g., compression spring). The press member 1310 may elastically support the one side part 1101 of the pen input device 1100 through the elastic member 1320. In a certain embodiment, the elastic structure 1301 may be implemented in the hinge housing 40 so as to elastically support the other end part 1102 of the pen input device 1100. In various embodiments, the elastic structure 1301 may be applied to the hinge housing 40 for the pen input device of which the length is not reduced.

In a certain embodiment, with reference to FIG. 14, a boundary 1401 between the other side part 1102 of the pen input device 1100 and the fourth wall 814 of the hinge housing 40 may be formed to be inclined so that the boundary 1401 can interfere with the fourth wall 814 in a direction in which the other side part 1102 is separated from the first recess 401 to the outside. The boundary 1401 may contribute to the non-separation of the pen input device 50 from the first recess 401 of the hinge housing 40 due to an unintended external force (e.g., external impact). In various embodiments, an example of preventing the separation of the pen input device 50 by using the boundary 1401 may be applied to the example of FIG. 10 or the example of FIG. 12.

There may be various methods for reducing the separation of the pen input device 50 from the first recess 401 of the hinge housing 40 due to the unintended external force (e.g., external impact). For example, by using attraction between magnets, the pen input device 1100 may be disposed in the first recess 401 of the hinge housing 40.

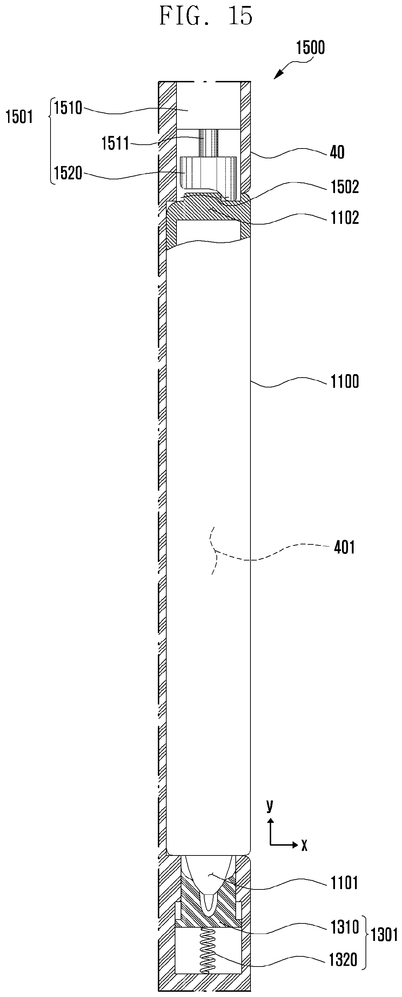

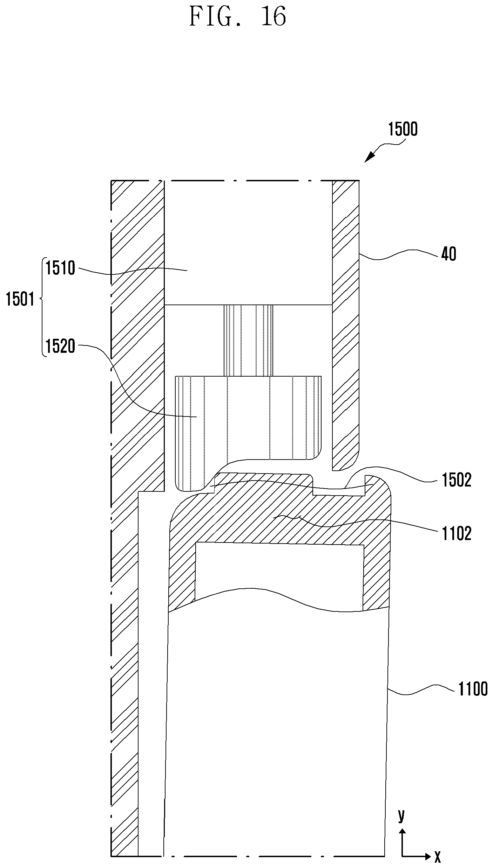

FIGS. 15 and 16 illustrate cross-sectional structures 1500 and 1600 in another embodiment in which an example of FIG. 13 is changed or modified.

With reference to FIG. 15, one side part 1101 of the pen input device 1100 may be elastically supported by the elastic structure 1301 included in the hinge housing 40. In an embodiment, a cam assembly 1501 corresponding to the other side part 1102 of the pen input device 1100 may be located in the hinge housing 40. The cam assembly 1501 may include, for example, a motor 1510 and a cam 1520 connected to a rotation shaft 1511 of the motor 1510. The other side part 1102 of the pen input device 1100 may include a guide groove structure 1502 that can interact with the cam 1520. If the pen input device 1100 is disposed in the first recess401 of the hinge housing 40, the electronic device 2 (refer to FIG. 2) may control the motor 1510 to rotate the cam 1520 so that there is interference between the cam 1520 and the guide groove structure 1502 in a direction in which the other side part 1102 of the pen input device 1100 is separated from the first recess 401 to the outside. The interference (e.g., lock state) between the cam 1520 and the groove structure 1502 may contribute to the non-separation of the pen input device 1100 from the first recess 401 due to the unintended external force (e.g., external impact). The electronic device 2 may include a motor driving circuit (e.g., motor controller or motor driver) electrically connected to the motor 1510. The motor driving circuit may control the motor 1510 based on a control signal received from a processor (e.g., processor 120 of FIG. 1). The motor driving circuit may include a motor encoder for detecting the driving state of the motor 1510. For example, the motor encoder may include a circular plate combined with the rotation shaft 1511 of the motor 1510, and a detector that can detect a rotation direction, rotation angle, rotation amount, rotation speed, rotation acceleration, or rotational angular velocity of the rotation shaft through electronically recognizable scales and marks on the circular plate. The processor may control the motor driving circuit based on instructions stored in the memory (e.g., memory 130 of FIG. 1).

According to an embodiment, the power management controller of the pen input device 1100 may identify whether a wireless charging signal is transmitted from the electronic device (e.g., host device) 2 (refer to FIG. 2). In a state where the pen input device 1100 is disposed in the first recess 401 of the hinge housing 40, the pen input device 1100 may detect the wireless charging signal from a magnetic field generator (e.g., charging coil) of the electronic device 2 through the pen tip sensor. When the electronic device 2 transmits the wireless charging signal to the pen input device 1100 (e.g., when the wireless charging is performed), the state in which the pen input device 1100 is disposed in the first recess 401 of the hinge housing 40 may be detected.

According to a certain embodiment, the state in which the pen input device 1100 is attached to the hinge housing 40 may be detected by using at least one sensor included in the electronic device 2 or the pen input device 1100. For example, the pen input device 1100 may be attached to the first recess 401 of the hinge housing 40 by using a magnet. Based on the magnetic force detected by using the at least one sensor included in the pen input device 1100 or the electronic device 2, the state in which the pen input device 1100 is disposed in the first recess 401 of the hinge housing 40 may be detected.

According to an embodiment, if there is a designated user input, the electronic device 2 (refer to FIG. 2) may control the motor 1510 to rotate the cam 1520 so that there is no substantial interference between the cam 1520 and the guide groove structure 1502 in the direction in which the other side part 1102 of the pen input device 1100 is separated from the first recess 401 to the outside. If there is no substantial interference between the cam 1520 and the guide groove structure 1502 (e.g., unlock state), the pen input device 1100 may be separated from the first recess 401 by applying the external force to the other side part 1102 of the pen input device 1100. The designated user input may be detected through various kinds of means, such as a screen or a button. In an embodiment, with reference to FIG. 16, due to the interaction between the cam 1520 and the guide groove structure 1502, the other side part 1102 of the pen input device 1100 may come or project out of the first recess 401 to facilitate the separation of the pen input device 1100. If the designated user input is detected in a state where the pen input device 1100 is not exposed to the outside or in a state where it is difficult to separate the pen input device 1100 to the outside (e.g., unfolded state of FIG. 2), the electronic device 2 may induce the switchover to another state (e.g., folded state of FIG. 3) by outputting information on the state through an output module (e.g., screen or speaker).

According to an embodiment of the disclosure, an electronic device (e.g., electronic device 2 of FIG. 2) may include a foldable housing (e.g., foldable housing 20 of FIG. 2) including a first housing (e.g., first housing 21 of FIG. 2), a second housing (e.g., second housing 22 of FIG. 2), and a folding part between the first housing and the second housing. The electronic device may include a pen input device (e.g., pen input device 50 of FIG. 4) detachably attached to the folding part. The folding part may include a first hinge (e.g., first hinge 631 of FIG. 5) and a second hinge (e.g., second hinge 632 of FIG. 5) configured to connect the first housing and the second housing with each other, and a hinge housing (e.g., hinge housing 40 of FIG. 5) configured to cover the first hinge and the second hinge and to form a part of an outer surface of the electronic device. The hinge housing may include a first recess (e.g., first recess 401 of FIG. 7), and the first recess may be located between the first hinge and the second hinge. The pen input device may be inserted into the first recess.

According to an embodiment of the disclosure, the pen input device (e.g., pen input device 50 of FIG. 4) disposed in the first recess (e.g., first recess 401 of FIG. 7) may not be exposed to outside in an unfolded state of the foldable housing (e.g., foldable housing 20 of FIG. 2), and may be exposed to the outside in a folded state of the foldable housing.

According to an embodiment of the disclosure, the hinge housing (e.g., hinge housing 40 of FIG. 7) may further include a second recess (e.g., second recess 402 of FIG. 7) separated from the first recess with a first wall (e.g., first wall 411 of FIG. 7) interposed therebetween, and located inside the electronic device. The hinge housing may further include a third recess (e.g., third recess 403 of FIG. 7) separated from the second recess with a second wall (e.g., second wall 412 of FIG. 7) interposed therebetween, and located inside the electronic device. The first wall and the second wall may face each other with the first recess interposed therebetween.

According to an embodiment of the disclosure, the hinge housing (e.g., hinge housing 40 of FIG. 7) may further include a third wall (e.g., third wall 413 of FIG. 7) configured to connect the first wall (e.g., first wall 411 of FIG. 7) and the second wall (e.g., second wall 412 of FIG. 7) with each other. When the pen input device (e.g., pen input device 50 of FIG. 4) is disposed in the first recess (e.g., first recess 401 of FIG. 7), the first wall 411, the second wall 412, and the third wall may face a lateral surface of the pen input device.

According to an embodiment of the disclosure, the electronic device (e.g., electronic device 2 of FIG. 2) may further include a flexible printed circuit board (e.g., electrical path 800 of FIG. 7) located in the foldable housing. The flexible printed circuit board may include a first part (e.g., first part 811 of FIG. 7) corresponding to the folding part, a second part (e.g., second part 812 of FIG. 7) extending from the first part to the first housing (e.g., first housing 21 of FIG. 2), and a third part (e.g., third part 813 of FIG. 7) extending from the first part to the second housing (e.g., second housing 22 of FIG. 2).

According to an embodiment of the disclosure, a first area (e.g., first area ⓐ of FIG. 7) of the first part may be located to face the third wall (e.g., third wall 413 of FIG. 7). In an unfolded state of the foldable housing (e.g., foldable housing 20 of FIG. 2), a second area (e.g., second area ⓑ of FIG. 7) of the first part may be located in the second recess (e.g., second recess 402 of FIG. 7), and a third area (e.g., third area ⓒ of FIG. 7) of the first part may be located in the third recess (e.g., third recess 403 of FIG. 7).

According to an embodiment of the disclosure, in a folded state of the foldable housing (e.g., foldable housing 20 of FIG. 2), the second area (e.g., second area ⓑ of FIG. 9) may be located out of the second recess (e.g., second recess 402 of FIG. 9), and the third area (e.g., third area ⓒ of FIG. 9) may be located out of the third recess (e.g., third recess 403 of FIG. 9).

According to an embodiment of the disclosure, the electronic device (electronic device 2 of FIG. 2) may further include an adhesive material located between the first area (e.g., first area ⓐ of FIG. 7) and the third wall (e.g., third wall 413 of FIG. 7).

According to an embodiment of the disclosure, the first area (e.g., first area ⓐ of FIG. 7) may be rigid.

According to an embodiment of the disclosure, the electronic device (e.g., electronic device 2 of FIG. 2) may further include a flexible display (e.g., flexible display 30 of FIG. 7) located in the foldable housing (e.g., foldable housing 20 of FIG. 2). The foldable housing may include a first surface (e.g., first surface 20A of FIG. 2), a second surface (e.g., second surface 20B of FIG. 2) located on an opposite side to the first surface, and a side surface (e.g., first side surface 20C of FIG. 2) configured to surround a space between the first surface and the second surface. The flexible display may be visually exposed through the first surface. The foldable housing may be formed so that the first surface is folded inwardly.

According to an embodiment of the disclosure, a length of the pen input device (e.g., pen input device 1100 of FIG. 11) may be able to be reduced.

According to an embodiment of the disclosure, the electronic device (e.g., electronic device 2 of FIG. 2) may further include an elastic structure configured to make the pen input device disposed in the first recess (e.g., first recess 401 of FIG. 10, 12, 13, or 15) and the hinge housing come in elastic contact with each other.

According to an embodiment of the disclosure, the elastic structure may be located in the pen input device (e.g., refer to the example of FIG. 10 or the example of FIG. 12).

According to another embodiment of the disclosure, the elastic structure may be located in the hinge housing (e.g., refer to the example of FIG. 13 or the example of FIG. 15).

According to an embodiment of the disclosure, the electronic device may further include a device (e.g., cam assembly 1501 and guide groove structure 1502 of FIG. 15) configured to make the pen input device be not separated from the first recess when the pen input device is disposed in the first recess, and to make the pen input device be in a separable state from the first recess in case that a user input is detected.

According to an embodiment of the disclosure, the pen input device may include an electromagnetic resonance (EMR) method, an active electrical stylus (AES) method, or an electric coupled resonance (ECR) method.

According to an embodiment of the disclosure, an electronic device (e.g., electronic device 2 of FIG. 2) may include a foldable housing (e.g., foldable housing 20 of FIG. 2) including a first housing (e.g., first housing 21 of FIG. 2), a second housing (e.g., second housing 22 of FIG. 2), and a folding part between the first housing and the second housing. The electronic device may include a pen input device (e.g., pen input device 50 of FIG. 4) detachably attached to the folding part. The folding part (e.g., hinge assembly 630 of FIG. 5) may include a first hinge (e.g., first hinge 631 of FIG. 5) and a second hinge (e.g., second hinge 632 of FIG. 5) configured to connect the first housing and the second housing with each other, and a hinge housing (e.g., hinge housing 40 of FIG. 6) configured to cover the first hinge and the second hinge and to form a part of an outer surface of the electronic device. The hinge housing may include a first recess (e.g., first recess 401 of FIG. 7) in which the pen input device can be disposed, and the first recess 401 may be located between the first hinge and the second hinge. The hinge housing may include a second recess (e.g., second recess 402 of FIG. 7) separated from the first recess with a first wall (e.g., first wall 411 of FIG. 7) interposed therebetween, and the second recess may be located inside the electronic device. The hinge housing may include a third recess (e.g., third recess 403 of FIG. 7) separated from the first recess with a second wall (e.g., second wall 412 of FIG. 7) interposed therebetween, and the third recess may be located inside the electronic device. The first wall and the second wall may face each other with the first recess interposed therebetween.

According to an embodiment of the disclosure, the electronic device (e.g., electronic device 2 of FIG. 2) may further include a flexible printed circuit board (e.g., electrical path 800 of FIG. 7) located in the foldable housing. The flexible printed circuit board may include a first part (e.g., first part 811 of FIG. 7) corresponding to the folding part, a second part (e.g., second part 812 of FIG. 7) extending from the first part to the first housing (e.g., first housing 21 of FIG. 2), and a third part (e.g., third part 813 of FIG. 7) extending from the first part to the second housing (e.g., second housing 22 of FIG. 2).

According to an embodiment of the disclosure, the hinge housing (e.g., hinge housing 40 of FIG. 7) may further include a third wall (e.g., third wall 413 of FIG. 7) connecting the first wall (e.g., first wall 411 of FIG. 7) and the second wall (e.g., second wall 412 of FIG. 7) with each other. When the pen input device (e.g., pen input device 50 of FIG. 4) is disposed in the first recess (e.g., first recess 401 of FIG. 7), the first wall 411, the second wall 412, and the third wall 413 may face the lateral surface of the pen input device. A first area (e.g., first area ⓐ of FIG. 7) of the first part may be located to face the third wall. In the unfolded state of the foldable housing, a second area (e.g., second area ⓑ of FIG. 7) of the first part may be located in the second recess (e.g., second recess 402 of FIG. 7), and a third area (e.g., third area ⓒ of FIG. 7) of the first part may be located in the third recess (e.g., third recess 403 of FIG. 7).

According to an embodiment of the disclosure, in the folded state of the foldable housing, the second area (e.g., second area ⓑ of FIG. 9) may be located out of the second recess (e.g., second recess 402 of FIG. 9), and the third area (e.g., third area ⓒ of FIG. 9) may be located out of the third recess (e.g., third recess 403 of FIG. 9).

According to an embodiment of the disclosure, the pen input device disposed in the first recess (e.g., first recess 401 of FIG. 7) may not be exposed to the outside in the unfolded state of the foldable housing, and may be exposed to the outside in the folded state of the foldable housing.

Embodiments of the disclosure that are disclosed in the specification and drawings are merely for easy explanation of the technical contents of the embodiments of the disclosure and proposal of specific examples to help understanding of the embodiments of the disclosure, but are not intended to limit the scope of the embodiments of the disclosure. Accordingly, it should be construed that all changes or modifications derived based on the technical concept of the various embodiments of the disclosure are included in the scope of the various embodiments of the disclosure in addition to the embodiments disclosed herein.

## Claims

1. An electronic device (2) comprising:
a foldable housing (20) including a first housing (21), a second housing (22), and a folding part between the first housing (21) and the second housing (22); and
a pen input device (50, 1100) detachably attached to the folding part (50a, 812a, 813a, 1102),
wherein the folding part includes a first hinge (631) and a second hinge (632) configured to connect the first housing (21) and the second housing (22) with each other, and a hinge housing (40) configured to cover the first hinge (631) and the second hinge (632) and to form a part of an outer surface of the electronic device,
wherein the hinge housing (40) includes a first recess (401) located between the first hinge (631) and the second hinge (632) and configured to dispose the pen input device (50, 1100) therein,
**characterised in that** a part (50a) of the pen input device (50, 1100) is exposed to the outside to form an outer surface of the electronic device (2) together with the hinge housing (40) when the pen input device (50, 1100) is disposed in the first recess (401) of the hinge housing (40) and the foldable housing (20) is in a folded state, and
wherein the hinge housing (40) and the part (50a) of the pen input device (50, 1100) are covered by the first housing (21) and the second housing (22) when the pen input device (50, 1100) is disposed in the first recess (401) of the hinge housing (40) and the foldable housing (20) is in an unfolded state.

2. The electronic device of claim 1, wherein the hinge housing (40) further comprises:
a second recess (402) separated from the first recess (401) with a first wall (411) interposed therebetween, and located inside the electronic device; and
a third recess (403) separated from the second recess (402) with a second wall (412) interposed therebetween, and located inside the electronic device, and
wherein the first wall (411) and the second wall (412) face each other with the first recess (401) interposed therebetween.

3. The electronic device of claim 2, wherein the hinge housing (40) further comprises a third wall (413) configured to connect the first wall (411) and the second wall (412) with each other, and
wherein when the pen input device (50, 1100) is disposed in the first recess (401), the first wall (411), the second wall (412), and the third wall (413) face a lateral surface of the pen input device (50, 1100).

4. The electronic device of any of claims 1 to 3, further comprising a flexible printed circuit board (800) located in the foldable housing (20),
wherein the flexible printed circuit board (800) includes a first part (811) corresponding to the folding part, a second part (812) extending from the first part (811) to the first housing (21), and a third part (813) extending from the first part (811) to the second housing (22),
wherein a first area (ⓐ) of the first part (811) is located to face the third wall (413), and
wherein in an unfolded state of the foldable housing (20), a second area (ⓑ) of the first part (811) is located in the second recess (402), and a third area (ⓒ) of the first part (811) is located in the third recess (403).

5. The electronic device of claim 3 or 4, wherein in a folded state of the foldable housing (20), the second area is located out of the second recess (402), and the third area is located out of the third recess (403).

6. The electronic device of any of claims 4 to 5, further comprising an adhesive material located between the first area and the third wall (413).

7. The electronic device of any of claims 4 to 6, wherein the first area is rigid.

8. The electronic device of any of claims 1 to 7, further comprising a flexible display (30) located in the foldable housing (20),
wherein the foldable housing (20) includes a first surface (20A), a second surface (20B) located on an opposite side to the first surface (20A), and a side surface (20C) configured to surround a space between the first surface (20A) and the second surface (20B),
wherein the flexible display (30) is visually exposed through the first surface (20A), and
wherein the foldable housing (20) is formed so that the first surface (20A) is folded inwardly.

9. The electronic device of any of claims 1 to 8, wherein a length of the pen input device (50, 1100) is capable of being reduced.

10. The electronic device of any of claims 1 to 9, further comprising an elastic structure configured to make the pen input device (50, 1100) disposed in the first recess (401) and the hinge housing (40) come in elastic contact with each other.

11. The electronic device of any of claims 1 to 10, wherein the elastic structure is located in the pen input device (50, 1100).

12. The electronic device of any of claims 1 to 10, wherein the elastic structure is located in the hinge housing (40).

13. The electronic device of any of claims 1 to 12, further comprising a device (1501, 1502) configured to make the pen input device (50, 1100) be not separated from the first recess (401) when the pen input device (50, 1100) is disposed in the first recess (401), and to make the pen input device (50, 1100) be in a separable state from the first recess (401) in case that a user input is detected.

14. The electronic device of any of claims 1 to 13, wherein the pen input device (50, 1100) comprises an electromagnetic resonance, EMR, method, an active electrical stylus, AES, method, or an electric coupled resonance, ECR, method.

## Patentansprüche

1. Elektronische Vorrichtung (2), umfassend:
ein faltbares Gehäuse (20), das ein erstes Gehäuse (21), ein zweites Gehäuse (22) und einen Faltabschnitt zwischen dem ersten Gehäuse (21) und dem zweiten Gehäuse (22) umfasst; und
eine Stifteingabevorrichtung (50, 1100), die an dem Faltabschnitt (50a, 812a, 813a, 1102) lösbar befestigt ist,
wobei der Faltabschnitt ein erstes Scharnier (631) und ein zweites Scharnier (632), die dazu eingerichtet sind, das erste Gehäuse (21) und das zweite Gehäuse (22) miteinander zu verbinden, und ein Scharniergehäuse (40) umfasst, das dazu ausgebildet ist, das erste Scharnier (631) und das zweite Scharnier (632) abzudecken und einen Teil einer Außenfläche der elektronischen Vorrichtung zu bilden,
wobei das Scharniergehäuse (40) eine erste Aussparung (401) umfasst, die sich zwischen dem ersten Scharnier (631) und dem zweiten Scharnier (632) befindet und dazu eingerichtet ist, die Stifteingabevorrichtung (50, 1100) darin anzuordnen,
**dadurch gekennzeichnet, dass**
ein Teil (50a) der Stifteingabevorrichtung (50, 1100) nach außen freiliegt, um zusammen mit dem Scharniergehäuse (40) eine Außenfläche der elektronischen Vorrichtung (2) zu bilden, wenn die Stifteingabevorrichtung (50, 1100) in der ersten Aussparung (401) des Scharniergehäuses (40) angeordnet ist und sich das faltbare Gehäuse (20) in einem gefalteten Zustand befindet, und
wobei das Scharniergehäuse (40) und der Teil (50a) der Stifteingabevorrichtung (50, 1100) von dem ersten Gehäuse (21) und dem zweiten Gehäuse (22) abgedeckt sind, wenn die Stifteingabevorrichtung (50, 1100) in der ersten Aussparung (401) des Scharniergehäuses (40) angeordnet ist und sich das faltbare Gehäuse (20) in einem entfalteten Zustand befindet.

2. Elektronische Vorrichtung nach Anspruch 1, wobei das Scharniergehäuse (40) ferner umfasst:
eine zweite Aussparung (402), die von der ersten Aussparung (401) durch eine dazwischen angeordnete erste Wand (411) getrennt ist und sich im Inneren der elektronischen Vorrichtung befindet; und
eine dritte Aussparung (403), die von der zweiten Aussparung (402) durch eine dazwischen angeordnete zweite Wand (412) getrennt ist und sich im Inneren der elektronischen Vorrichtung befindet, und
wobei die erste Wand (411) und die zweite Wand (412) unter Dazwischenanordnung der ersten Aussparung (401) einander zugewandt sind.

3. Elektronische Vorrichtung nach Anspruch 2, wobei das Scharniergehäuse (40) ferner eine dritte Wand (413) umfasst, die dazu eingerichtet ist, die erste Wand (411) und die zweite Wand (412) miteinander zu verbinden, und
wobei, wenn die Stifteingabevorrichtung (50, 1100) in der ersten Aussparung (401) angeordnet ist, die erste Wand (411), die zweite Wand (412) und die dritte Wand (413) einer Seitenfläche der Stifteingabevorrichtung (50, 1100) zugewandt sind.

4. Elektronische Vorrichtung nach einem der Ansprüche 1 bis 3, ferner umfassend eine flexible Leiterplatte (800), die sich in dem faltbaren Gehäuse (20) befindet,
wobei die flexible Leiterplatte (800) einen ersten Abschnitt (811) umfasst, der mit dem Faltabschnitt korrespondiert, einen zweiten Abschnitt (812), der sich von dem ersten Abschnitt (811) zu dem ersten Gehäuse (21) erstreckt, und einen dritten Abschnitt (813), der sich von dem ersten Abschnitt (811) zu dem zweiten Gehäuse (22) erstreckt,
wobei ein erster Bereich (ⓐ) des ersten Abschnitts (811) so angeordnet ist, dass er der dritten Wand (413) zugewandt ist, und
wobei sich in einem entfalteten Zustand des faltbaren Gehäuses (20) ein zweiter Bereich (ⓑ) des ersten Abschnitts (811) in der zweiten Aussparung (402) befindet und sich ein dritter Bereich (^{©}) des ersten Abschnitts (811) in der dritten Aussparung (403) befindet.

5. Elektronische Vorrichtung nach Anspruch 3 oder 4, wobei sich in einem gefalteten Zustand des faltbaren Gehäuses (20) der zweite Bereich außerhalb der zweiten Aussparung (402) befindet und sich der dritte Bereich außerhalb der dritten Aussparung (403) befindet.

6. Elektronische Vorrichtung nach einem der Ansprüche 4 bis 5, ferner umfassend ein Klebematerial, das sich zwischen dem ersten Bereich und der dritten Wand (413) befindet.

7. Elektronische Vorrichtung nach einem der Ansprüche 4 bis 6, wobei der erste Bereich starr ist.

8. Elektronische Vorrichtung nach einem der Ansprüche 1 bis 7, ferner umfassend eine flexible Anzeige (30), die sich in dem faltbaren Gehäuse (20) befindet,
wobei das faltbare Gehäuse (20) eine erste Fläche (20A), eine zweite Fläche (20B), die sich auf einer der ersten Fläche (20A) gegenüberliegenden Seite befindet, und eine Seitenfläche (20C) umfasst, die dazu eingerichtet ist, einen Raum zwischen der ersten Fläche (20A) und der zweiten Fläche (20B) zu umgeben,
wobei die flexible Anzeige (30) durch die erste Fläche (20A) visuell freigelegt ist, und
wobei das faltbare Gehäuse (20) so ausgeformt ist, dass die erste Fläche (20A) nach innen gefaltet ist.

9. Elektronische Vorrichtung nach einem der Ansprüche 1 bis 8, wobei eine Länge der Stifteingabevorrichtung (50, 1100) verringerbar ist.

10. Elektronische Vorrichtung nach einem der Ansprüche 1 bis 9, ferner umfassend eine elastische Struktur, die dazu ausgebildet ist, zu bewirken, dass die in der ersten Aussparung (401) angeordnete Stifteingabevorrichtung (50, 1100) und das Scharniergehäuse (40) in elastischen Kontakt miteinander kommen.

11. Elektronische Vorrichtung nach einem der Ansprüche 1 bis 10, wobei sich die elastische Struktur in der Stifteingabevorrichtung (50, 1100) befindet.

12. Elektronische Vorrichtung nach einem der Ansprüche 1 bis 10, wobei sich die elastische Struktur in dem Scharniergehäuse (40) befindet.

13. Elektronische Vorrichtung nach einem der Ansprüche 1 bis 12, ferner umfassend eine Vorrichtung (1501, 1502), die dazu eingerichtet ist, zu bewirken, dass die Stifteingabevorrichtung (50, 1100) nicht von der ersten Aussparung (401) getrennt wird, wenn die Stifteingabevorrichtung (50, 1100) in der ersten Aussparung (401) angeordnet ist, und zu bewirken, dass sich die Stifteingabevorrichtung (50, 1100) in einem von der ersten Aussparung (401) trennbaren Zustand befindet, falls eine Benutzereingabe erfasst wird.

14. Elektronische Vorrichtung nach einem der Ansprüche 1 bis 13, wobei die Stifteingabevorrichtung (50, 1100) ein elektromagnetisches Resonanz-, EMR, -Verfahren, ein aktives elektrisches Stift-, AES, -Verfahren oder ein elektrisch gekoppeltes Resonanz-, ECR, - Verfahren umfasst.

## Revendications

1. Dispositif électronique (2) comprenant :
un boîtier pliable (20) comprenant un premier boîtier (21), un second boîtier (22) et une partie de pliage entre le premier boîtier (21) et le second boîtier (22) ; et
un dispositif d'entrée au stylet (50, 1100) fixé de manière amovible à la partie de pliage (50a, 812a, 813a, 1102),
dans lequel la partie de pliage comprend une première charnière (631) et une seconde charnière (632) configurées pour relier le premier boîtier (21) et le second boîtier (22) l'un à l'autre, et un boîtier de charnière (40) configuré pour recouvrir la première charnière (631) et la seconde charnière (632) et pour former une partie d'une surface extérieure du dispositif électronique,
dans lequel le boîtier de charnière (40) comprend un premier évidement (401) situé entre la première charnière (631) et la seconde charnière (632) et configuré pour y disposer le dispositif d'entrée au stylet (50, 1100),
**caractérisé en ce que**
une partie (50a) du dispositif d'entrée au stylet (50, 1100) est exposée vers l'extérieur pour former une surface extérieure du dispositif électronique (2) conjointement avec le boîtier de charnière (40) lorsque le dispositif d'entrée au stylet (50, 1100) est disposé dans le premier évidement (401) du boîtier de charnière (40) et que le boîtier pliable (20) est dans un état plié, et
dans lequel le boîtier de charnière (40) et la partie (50a) du dispositif d'entrée au stylet (50, 1100) sont recouverts par le premier boîtier (21) et le second boîtier (22) lorsque le dispositif d'entrée au stylet (50, 1100) est disposé dans le premier évidement (401) du boîtier de charnière (40) et que le boîtier pliable (20) est dans un état déplié.

2. Dispositif électronique selon la revendication 1, dans lequel le boîtier de charnière (40) comprend en outre :
un deuxième évidement (402) séparé du premier évidement (401) par interposition d'une première paroi (411), et situé à l'intérieur du dispositif électronique ; et
un troisième évidement (403) séparé du deuxième évidement (402) par interposition d'une deuxième paroi (412), et situé à l'intérieur du dispositif électronique, et
et dans lequel la première paroi (411) et la deuxième paroi (412) se font face avec le premier évidement (401) interposé entre elles.

3. Dispositif électronique selon la revendication 2, dans lequel le boîtier de charnière (40) comprend en outre une troisième paroi (413) configurée pour relier la première paroi (411) et la deuxième paroi (412) l'une à l'autre, et
et dans lequel, lorsque le dispositif d'entrée au stylet (50, 1100) est disposé dans le premier évidement (401), la première paroi (411), la deuxième paroi (412) et la troisième paroi (413) font face à une surface latérale du dispositif d'entrée au stylet (50, 1100).

4. Dispositif électronique selon l'une quelconque des revendications 1 à 3, comprenant en outre une carte de circuit imprimé flexible (800) située dans le boîtier pliable (20),
dans lequel la carte de circuit imprimé flexible (800) comprend une première partie (811) correspondant à la partie de pliage, une deuxième partie (812) s'étendant depuis la première partie (811) vers le premier boîtier (21), et une troisième partie (813) s'étendant depuis la première partie (811) vers le second boîtier (22),
dans lequel une première zone (ⓐ) de la première partie (811) est située de manière à faire face à la troisième paroi (413), et
dans lequel, dans un état déplié du boîtier pliable (20), une deuxième zone (ⓑ) de la première partie (811) est située dans le deuxième évidement (402), et une troisième zone (^{©}) de la première partie (811) est située dans le troisième évidement (403).

5. Dispositif électronique selon la revendication 3 ou 4, dans lequel, dans un état plié du boîtier pliable (20), la deuxième zone est située hors du deuxième évidement (402), et la troisième zone est située hors du troisième évidement (403).

6. Dispositif électronique selon l'une quelconque des revendications 4 à 5, comprenant en outre un matériau adhésif situé entre la première zone et la troisième paroi (413).

7. Dispositif électronique selon l'une quelconque des revendications 4 à 6, dans lequel la première zone est rigide.

8. Dispositif électronique selon l'une quelconque des revendications 1 à 7, comprenant en outre un affichage flexible (30) situé dans le boîtier pliable (20),
dans lequel le boîtier pliable (20) comprend une première surface (20A), une seconde surface (20B) située sur un côté opposé à la première surface (20A), et une surface latérale (20C) configurée pour entourer un espace entre la première surface (20A) et la seconde surface (20B),
dans lequel l'affichage flexible (30) est exposé visuellement à travers la première surface (20A), et
dans lequel le boîtier pliable (20) est formé de sorte que la première surface (20A) soit pliée vers l'intérieur.

9. Dispositif électronique selon l'une quelconque des revendications 1 à 8, dans lequel une longueur du dispositif d'entrée au stylet (50, 1100) est susceptible d'être réduite.

10. Dispositif électronique selon l'une quelconque des revendications 1 à 9, comprenant en outre une structure élastique configurée pour amener le dispositif d'entrée au stylet (50, 1100) disposé dans le premier évidement (401) et le boîtier de charnière (40) à venir en contact élastique l'un avec l'autre.

11. Dispositif électronique selon l'une quelconque des revendications 1 à 10, dans lequel la structure élastique est située dans le dispositif d'entrée au stylet (50, 1100).

12. Dispositif électronique selon l'une quelconque des revendications 1 à 10, dans lequel la structure élastique est située dans le boîtier de charnière (40).

13. Dispositif électronique selon l'une quelconque des revendications 1 à 12, comprenant en outre un dispositif (1501, 1502) configuré pour empêcher que le dispositif d'entrée au stylet (50, 1100) soit séparé du premier évidement (401) lorsque le dispositif d'entrée au stylet (50, 1100) est disposé dans le premier évidement (401), et pour permettre que le dispositif d'entrée au stylet (50, 1100) soit dans un état séparable du premier évidement (401) dans le cas où une entrée utilisateur est détectée.

14. Dispositif électronique selon l'une quelconque des revendications 1 à 13, dans lequel le dispositif d'entrée au stylet (50, 1100) comprend une méthode de résonance électromagnétique, EMR, une méthode de stylet électrique actif, AES, ou une méthode de résonance à couplage électrique, ECR.
